(19) Europäisches Patentamt
European Patent Office
Office européen des brevets

(11) **EP 3 658 604 B1**

(12) # FASCICULE DE BREVET EUROPEEN

(45) Date de publication et mention de la délivrance du brevet:
**04.09.2024 Bulletin 2024/36**

(21) Numéro de dépôt: **18758932.0**

(22) Date de dépôt: **26.07.2018**

(51) Classification Internationale des Brevets (IPC):
***C08G 18/71*** *(2006.01)* ***C08G 18/42*** *(2006.01)*
***C09J 175/06*** *(2006.01)* ***C08L 75/06*** *(2006.01)*

(52) Classification Coopérative des Brevets (CPC):
**C08G 18/4238; C08G 18/718; C08L 75/06; C09J 175/06;** C08G 2170/40

(86) Numéro de dépôt international:
**PCT/FR2018/051911**

(87) Numéro de publication internationale:
**WO 2019/020943 (31.01.2019 Gazette 2019/05)**

(54) **COMPOSITION ADHESIVE RETICULABLE PAR CHAUFFAGE**

WÄRMEVERNETZBARE KLEBSTOFFZUSAMMENSETZUNG

HEAT-CROSSLINKABLE ADHESIVE COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2017 FR 1757229**

(43) Date de publication de la demande:
**03.06.2020 Bulletin 2020/23**

(73) Titulaire: **Bostik SA**
**92700 Colombes (FR)**

(72) Inventeur: **GOUBARD, David**
**67000 Strasbourg (FR)**

(74) Mandataire: **Arkema Patent**
**Arkema France**
**DRD-DPI**
**420, rue d’Estienne d’Orves**
**92705 Colombes Cedex (FR)**

(56) Documents cités:
**EP-A1- 2 865 694**
**US-A- 4 408 021**
**US-A1- 2010 029 860**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

DOMAINE DE L'INVENTION

La présente invention a pour objet une composition adhésive réticulable par chauffage, et un article auto-adhésif comprenant une couche support revêtue d'une couche auto-adhésive consistant en ladite composition adhésive réticulée.

ARRIERE-PLAN TECHNIQUE

Les adhésifs sensibles à la pression (également dénommés colles auto-adhésives ou encore, en anglais, "Pressure Sensitive Adhesives" ou PSA) sont des substances conférant au support qui en est revêtu un pouvoir collant immédiat à température ambiante (souvent désigné sous le terme de "tack"), lequel permet son adhésion instantanée à un substrat sous l'effet d'une pression légère et brève. Les PSA sont largement utilisés pour la fabrication d'étiquettes auto-adhésives qui sont fixées sur des articles à des fins de présentation d'informations (telles que code barre, dénomination, prix) et/ou à des fins décoratives, que ce soit lors de collages définitifs ou temporaires. Les PSA sont également mis en oeuvre pour la fabrication de rubans auto-adhésifs d'utilisations variées. On peut citer par exemple outre le ruban adhésif transparent largement utilisé dans la vie quotidienne : la mise en forme et l'assemblage d'emballages en carton ; la protection de surfaces pour les travaux de peinture, dans la construction ; la fixation et le maintien d'éléments divers tels que panneaux, briques, objets protubérants, dans la construction de bâtiments ou d'édifices ; la fixation et le maintien de partie métalliques ou plastiques ou en verre, plates ou à profil spécifique, tels des câbles électriques, des films plastiques, des vitres, des tôles, des inscriptions, des logos, des parties de sièges, des tableaux de bord, des parois plastiques ou textiles, des conduits ou des tuyaux de circulation de fluides, notamment dans l'industrie des transports ; le collage des moquettes par rubans adhésifs à double face. EP2865694 A1 divulgue une composition adhésive réticulable par chauffage comprenant des polymères à terminaisons alkoxysilanes hydrolysables.

En vue de la fabrication d'étiquettes et/ou rubans auto-adhésifs, les PSA sont souvent appliqués par des procédés d'enduction en continu sur la totalité de la surface d'une couche support (le cas échéant imprimable) de grandes dimensions, à raison d'une quantité (généralement exprimée en g/m$^2$) et désignée ci-après par le terme de "grammage". La couche support est constituée de papier ou de film d'un matériau polymère à une ou plusieurs couches. La couche d'adhésif qui recouvre la couche support peut être elle-même recouverte d'une couche anti-adhérente protectrice (souvent dénommée par l'appellation anglaise de "release liner"), par exemple constituée d'un film siliconé. Le système multicouche obtenu est généralement conditionné par enroulement sous forme de larges bobines ayant jusqu'à 2 m de largeur et 1 m de diamètre, qui peuvent être stockées et transportées.

Ces systèmes multicouches peuvent être ultérieurement convertis en étiquettes auto-adhésives applicables par l'utilisateur final, au moyen de procédés de transformation qui incluent l'impression des éléments informatifs et/ou décoratifs désirés sur la face imprimable de la couche support, puis la découpe à la forme et aux dimensions souhaitées. La couche anti-adhérente protectrice peut être facilement enlevée sans modification de la couche d'adhésif qui reste fixée sur la couche support. Après séparation de sa couche anti-adhérente protectrice, l'étiquette est appliquée sur l'article à revêtir soit manuellement, soit à l'aide d'étiqueteuses sur des chaînes automatisées de conditionnement.

Ces systèmes multicouches peuvent être également transformés en rubans auto-adhésifs par découpe et conditionnement en rouleaux de largeur et de longueurs déterminées.

Les PSA permettent, en raison de leur pegosité (« tack » en anglais) élevée à température ambiante, une prise ou accroche rapide de l'étiquette et/ou du ruban auto-adhésifs sur le substrat (ou article) à revêtir (par exemple, s'agissant d'étiquettes, sur des bouteilles ou bien, s'agissant de rubans, sur des cartons d'emballage à mettre en forme), propre à l'obtention de cadences de production industrielle importantes.

Il existe un domaine d'application des PSA pour lequel il est souhaitable que le pouvoir adhésif des étiquettes et/ou rubans sur le substrat soit également maintenu lorsque le joint de colle assurant la fixation est exposé (de même, par conséquent, que l'article revêtu de l'étiquette et/ou du ruban) à une température susceptible de varier dans un large domaine. On peut citer à titre d'exemple la pose d'étiquettes sur certains organes des automobiles (ou autres véhicules) situés à proximité du moteur, ou sur des emballages conçus pour recevoir durant leur conditionnement un liquide chaud, ou encore sur des articles (tels les pneumatiques) qui sont étiquetés à chaud, au sortir des chaînes de fabrication. On peut également citer la mise en oeuvre de rubans auto-adhésifs pour l'assemblage de pièces pour lesquelles une bonne tenue thermique est nécessaire comme dans le cas, par exemple, de l'habillage intérieur des avions ou autres véhicules.

Des PSA souvent utilisés pour ce domaine d'application comprennent des polymères (ou copolymères) de type acrylate de masse molaire très élevée. Ces derniers se présentent sous la forme soit d'émulsion aqueuse soit de solution organique. Toutefois, l'enduction de tels PSA sur une couche support est compliquée, au plan industriel, par le fait qu'il est nécessaire de prévoir soit une étape supplémentaire de séchage de l'émulsion, soit des installations particulières prenant en compte les problèmes d'hygiène et de sécurité industrielles liés à l'évaporation du solvant

organique. Dans les 2 cas, les inconvénients liés à l'odeur désagréable des monomères ou polymères acryliques doivent également être pris en compte.

On connaît des PSA qui ne comprennent ni solvant ni eau. Ainsi, les adhésifs thermofusibles sensibles à la pression (également dénommés en anglais Hot Melt Pressure Sensitive Adhesive ou HMPSA) sont des substances solides à température ambiante, qui sont déposées (ou enduites) sur le support à l'état fondu, et assurent à ce dernier après refroidissement un tack et un pouvoir adhésif importants sur divers substrats. Cependant, les compositions correspondantes comprennent généralement un polymère thermoplastique, de sorte que le joint de colle assurant la fixation du support au substrat ne présente pas à température élevée toute la cohésion nécessaire pour le domaine d'application visé précédemment.

Il existe donc un besoin pour de nouvelles compositions adhésives réticulables par chauffage qui conduisent après enduction sur un support puis réticulation, à un joint de colle (assurant la fixation de l'article auto-adhésif ainsi obtenu sur un substrat) qui garde la cohésion requise sur un large domaine de température, notamment à température élevée.

DESCRIPTION DE L'INVENTION

La présente invention concerne une composition adhésive réticulable par chauffage comprenant :

- de 20% à 84 % en poids d'une composition (A) comprenant :

  • de 75% à 100% en poids d'au moins un polyuréthane comprenant 2 groupes terminaux de type alkoxysilane hydrolysables et ayant la formule (I) suivante :

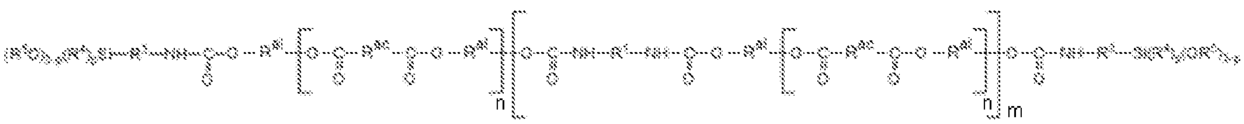

(I)

dans laquelle :

- $R^1$ représente un radical divalent hydrocarboné comprenant de 5 à 15 atomes de carbone qui peut être aromatique ou aliphatique, linéaire, ramifié ou cyclique;
- $R^{al}$ représente un radical hydrocarboné divalent issu d'un diol saturé, par remplacement de chacun des deux groupes hydroxyles par une valence libre, ledit diol ayant un indice d'hydroxyle $I_{OH}$ supérieur à 220 mg KOH/g ;
- $R^{ac}$ représente un radical hydrocarboné divalent issu d'un acide dicarboxylique saturé, par remplacement de chacun des deux groupes carboxyles -COOH par une valence libre, ledit acide ayant un indice d'acide $I_A$ supérieur à 200 mg KOH/g ;
- n est un nombre tel que le polyester diol de formule (III) :

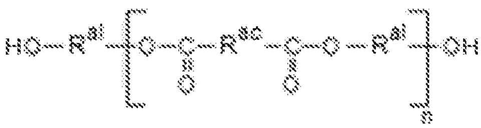

(III)

a un indice d'hydroxyle $I_{OH}$ compris entre 4 et 24 mg KOH/g, de préférence entre 9 et 24 mg KOH/g ;

- $R^3$ représente un radical divalent alkylène linéaire comprenant de 1 à 3 atomes de carbone ;
- $R^4$ et $R^5$, identiques ou différents, représentent chacun un radical alkyle linéaire ou ramifié de 1 à 4 atomes de carbone, avec la possibilité lorsqu'il y a plusieurs radicaux $R^4$ (ou $R^5$) que ceux-ci soient identiques ou différents ;
- m est un nombre entier tel que la masse molaire moyenne en nombre du polymère de formule (I) est comprise entre 400 g/mol et 50 000 g/mol;
- p est un nombre entier égal à 0, 1 ou 2 ;

- de 0% à 25% en poids d'au moins un polyuréthane comprenant 1 groupe terminal de type alkoxysilane hydrolysable et ayant la formule (II) suivante:

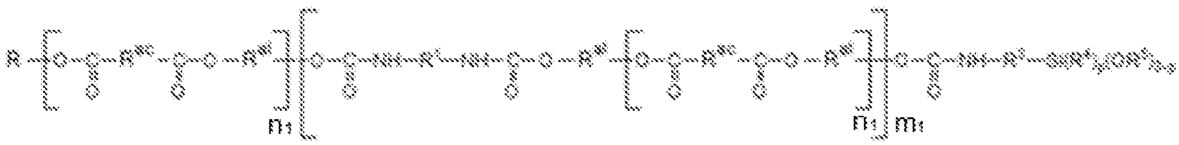

(II)

dans laquelle :

- $n_1$ et $m_1$ sont chacun des nombres entiers tels que la masse molaire moyenne en nombre du polyuréthane de formule (II) est comprise entre 400 g/mol et 50 000 g/mol ;
- $R^{ac}$ et $R^{al}$ sont tels que définis précédemment ; et
- R représente un radical hydrocarboné monovalent issu d'un monol, par remplacement du groupe hydroxyle par une valence libre,

ladite composition (A) étant obtenue par un procédé qui comprend une étape de préparation d'une composition (A-1) comprenant un polyester diol amorphe de formule (III) susmentionnée ou un mélange de polyesters diols amorphes de formule (III) susmentionnée, en faisant réagir par une réaction de polycondensation :

- (i) une composition (A-1-1) comprenant au moins un acide dicarboxylique saturé, ladite composition (A-1-1) ayant un indice d'acide $I_A$ supérieur à 200 mg KOH/g ; et
- (ii) une composition (A-1-2) comprenant au moins un diol saturé, ladite composition (A-1-2) ayant un indice d'hydroxyle $I_{OH}$ supérieur à 220 mg KOH/g ;

à condition qu'au moins un acide dicarboxylique saturé de la composition (A-1-1) ou au moins un diol saturé de la composition (A-1-2) soit ramifié, et

- (iii) éventuellement une composition (A-1-3) comprenant au moins un monol,

la composition (A-1) ayant un indice hydroxyle $I_{OH}$ compris entre 4 et 24 mg KOH/g, de préférence entre 9 et 24 mg KOH/g ;

- de 15% à 79% en poids d'une résine tackifiante compatible (B), de préférence de masse molaire moyenne en nombre comprise entre 200 g/mol et 50 000 g/mol, et préférentiellement choisie parmi les résines suivantes :

  - (i) susceptibles d'être obtenues par polymérisation d'hydrocarbures terpéniques et de phénols, en présence de catalyseur(s) de Friedel-Crafts,
  - (ii) susceptibles d'être obtenues par polymérisation d'alpha-méthyl styrène, et éventuellement par réaction avec des phénols ;
  - (iii) les colophanes d'origine naturelle ou modifiées (telles que par exemple la colophane extraite de la gomme de pins, la colophane de bois extraite des racines de l'arbre) et leurs dérivés hydrogénés, dimérisés, polymérisés ou estérifiés par des monoalcools ou des polyols (comme par exemple le glycérol ou le pentaérythritol) ;
  - (iv) les résines acryliques ayant en particulier une viscosité à 100°C inférieure à 100 Pa.s ; et
  - (v) leurs mélanges ;

- de 0,01% à 5%, de préférence de 0,01% à 3% en poids d'un catalyseur de réticulation (C).

Dans le cadre de l'invention, les quantités exprimées sous forme de pourcentages correspondent à des pourcentages poids/poids. Par exemple, la composition adhésive de l'invention comprend de 20% à 84 % en poids d'une composition (A) par rapport au poids total de ladite composition adhésive.

Dans le présent texte :

- les masses molaires moyennes en nombre indiquées pour les polymères sont déterminées par chromatographie à perméation de gel dans le THF (ou GPC, également appelée chromatographie par exclusion de taille ou SEC), avec étalonnage par rapport à un polystyrène standard de poids moléculaire externe certifié ;

- l'indice d'acide $I_A$ d'un acide dicarboxylique est le nombre de fonction carboxylique par gramme d'acide, ledit nombre étant exprimé sous la forme d'équivalent en milligrammes de KOH nécessaire pour neutraliser l'acidité de 1 gramme de d'acide, déterminé par titrimétrie, ledit nombre étant relié à la masse molaire moyenne en nombre M dudit acide par la relation suivante :

$$I_A = (56,1 \times 2 \times 1000) / M$$

- l'indice hydroxyle $I_{OH}$ d'un diol est le nombre de fonctions hydroxyle par gramme de diol, ledit nombre étant exprimé sous la forme d'équivalent en milligrammes de KOH utilisé dans le dosage des fonctions hydroxyles, déterminé par titrimétrie selon la norme ISO 14900:2001, ledit nombre étant relié à la masse molaire moyenne en nombre M' dudit diol par la relation :

$$I_{OH} = (56,1 \times 2 \times 1000)/ M'$$

- les viscosités indiquées sont mesurées selon la norme DIN ISO 2555 par un viscosimètre Brookfield RTV, éventuellement équipé (selon la température de mesure) d'un système Thermosel.

**1. Composition (A)**

***Procédé de préparation de la composition (A)***

La composition (A) selon l'invention peut être préparée selon un procédé en plusieurs étapes séquentielles.

**1ère étape** : Préparation d'une composition (A-1) ayant un indice hydroxyle $I_{OH}$ compris entre 4 et 24 mg KOH/g

La composition (A-1) est obtenue par réaction de polycondensation entre:

- un acide dicarboxylique saturé ou un mélange d'acides dicarboxyliques saturés dans une composition (A-1-1), ladite composition (A-1-1) ayant un indice d'acide $I_A$ supérieur à 200 mg KOH/g ; et
- un diol saturé ou un mélange de diols saturés dans une composition (A-1-2), ladite composition (A-1-2) ayant un indice d'hydroxyle $I_{OH}$ supérieur à 220 mg KOH/g ; et
- éventuellement un monol ou un mélange de monols dans une composition (A-1-3) ;

à condition qu'au moins un acide dicarboxylique saturé de la composition (A-1-1) ou au moins un diol saturé de la composition (A-1-2) soit ramifié.

L'indice hydroxyle ion de la composition (A-1) représente le nombre de fonctions hydroxyle par gramme de composition (A-1), ledit nombre étant exprimé sous la forme d'équivalent en milligrammes de KOH utilisé dans le dosage des fonctions hydroxyles, déterminé expérimentalement par titrimétrie selon la norme ISO 14900:2001. Dans le cas où la composition (A-1) est un mélange de polyols, l'$I_{OH}$ peut également être calculé à partir des $I_{OH}$ connus de chacun des polyols et de leur teneur pondérale respective dans ledit mélange.

*Acide(s) dicarboxylique(s)*

Selon l'invention, l'(les) acide(s) dicarboxylique(s) saturé(s) de la composition (A-1-1) a (ont) un indice d'acide $I_A$ supérieur à 200 mg KOH/g.

De préférence, l'(les) acide(s) dicarboxylique(s) saturé(s) de la composition (A-1-1) a (ont) un indice d'acide $I_A$ supérieur ou égal à 300 mg KOH/g, de préférence supérieur ou égal à 400 mg KOH/g, préférentiellement supérieur ou égal à 500 mg KOH/g, en particulier supérieur ou égal à 700 mg KOH/g, et avantageusement supérieur ou égal à 800 mg KOH/g.

De préférence, l'(les) acide(s) dicarboxylique(s) saturé(s) de la composition (A-1-1) a (ont) un indice d'acide $I_A$ égal à 555 mg KOH/g ou égal à 768 mg KOH/g.

Lorsque la composition (A-1-1) comprend un mélange d'acides dicarboxyliques, il est entendu que chaque acide dicarboxylique du mélange a un indice d'acide $I_A$ tel que défini ci-dessus.

L'acide dicarboxylique peut être linéaire ou ramifié, de préférence linéaire.

L'acide dicarboxylique peut être aliphatique ou cycloaliphatique.

De préférence, l'acide dicarboxylique n'est pas un acide gras dimérisé.

L'acide dicarboxylique selon l'invention peut être choisi dans le groupe constitué de l'acide malonique, de l'acide succinique, de l'acide fumarique, de l'acide glutarique, de l'acide adipique, de l'acide 1,3- ou 1,4-cyclohexane dicarboxylique, de l'acide 3-méthyl-1,5-pentanedicarboxylique, de l'acide 1,10-décanedicarboxylique, de l'acide 1,12-dodécanedicarboxylique, de l'acide 1,18-octadécanedicarboxylique, de l'acide méthyltétrahydrophthalique, de l'acide hexahydrophthalique, de l'acide tétrahydrophthalique, de l'acide azélaique, de l'acide sébacique et de leurs mélanges.
De préférence, l'acide dicarboxylique est l'acide adipique.
De préférence, l'acide dicarboxylique est l'acide sébacique.
La composition (A-1-1) susmentionnée peut avoir un indice d'acide $I_A$ supérieur ou égal à 300 mg KOH/g, de préférence supérieur ou égal à 400 mg KOH/g, préférentiellement supérieur ou égal à 500 mg KOH/g, en particulier supérieur ou égal à 700 mg KOH/g, et avantageusement supérieur ou égal à 800 mg KOH/g.
L'indice d'acide $I_A$ de la composition (A-1-1) est le nombre de fonction carboxylique par gramme de composition (A-1-1), ledit nombre étant exprimé sous la forme d'équivalent en milligrammes de KOH nécessaire pour neutraliser l'acidité de 1 gramme d'acide, déterminé par titrimétrie selon les normes EN 1241 : 1998 (typiquement acides à courtes chaînes) ou EN ISO 660 : 2009 (typiquement acides à longues chaînes) en fonction notamment de la balance hydrophile / lipophile de la composition (A-1-1). Dans le cas où la composition (A-1-1) est un mélange de diacides, l'$I_A$ peut également être calculé à partir des $I_A$ connus de chacun des diacides et de leur teneur pondérale respective dans ledit mélange.

*Diol(s)*

Selon l'invention, le(s) diol(s) saturé(s) de la composition (A-1-2) a (ont) un indice d'hydroxyle $I_{OH}$ supérieur à 220 mg KOH/g.
De préférence, le(s) diol(s) saturé(s) de la composition (A-1-2) a(ont) un indice d'hydroxyle $I_{OH}$ supérieur ou égal à 500 mg KOH/g, de préférence supérieur ou égal à 700 mg KOH/g, encore plus préférentiellement supérieur ou égal à 900 mg KOH/g.
De préférence, le(s) diol(s) saturé(s) de la composition (A-1-2) a (ont) un indice d'hydroxyle $I_{OH}$ égal à 950 mg KOH/g, ou égal à 1078 mg KOH/g, ou égal à 1808 mg KOH/g.
Lorsque la composition (A-1-2) comprend un mélange de diols saturés, il est entendu que chaque diol du mélange a un indice d'hydroxyle $I_{OH}$ tel que défini ci-dessus.
Le diol mis en oeuvre peut être aromatique ou aliphatique (de préférence aliphatique), linéaire ou ramifié, de préférence ramifié.
Selon un mode de réalisation, au moins un diol saturé de la composition (A-1-2) est ramifié, de préférence tous les diols saturés en mélange dans la composition (A-1-2) sont ramifiés.
De préférence, le diol n'est pas un diol gras dimérisé.
Le diol selon l'invention peut être choisi dans le groupe constitué de l'éthylène glycol (CAS : 107-21-1), du diéthylène glycol, du triéthylène glycol, du tétraéthylène glycol, du 1,2-propanediol, du dipropylène glycol, du tripropylène glycol, du tétrapropylène glycol, du 1,6-hexanediol, du 3-éthyl-2-méthyl-1,5-pentanediol, du 2-éthyl-3-propyl-1,5-pentanediol, du 2,4-diméthyl-3-éthyl-1,5-pentanediol, du 2-éthyl-4-méthyl-3-propyl-1,5-pentadiol, du 2,3-diéthyl-4-méthyl-1,5-pentanediol, du 3-éthyl-2,2,4-triméthyl-1,5-pentadiol, 2,2-diméthyl-4-éthyl-3-propyl-1,5-pentanediol, 2-méthyl-2-propyl-1,5-pentanediol, du 2,4-diméthyl-3-éthyl-2-propyl-1,5-pentanediol, du 2,3-dipropyl-4-éthyl-2-méthyl-1,5-pentanediol, du 2-butyl-2-éthyl-1,5-pentanediol, du 2-butyl-2,3-diéthyl-4-méthyl-1,5-pentanediol, du 2-butyl-2,4-diéthyl-3-propyl-1,5-pentanediol, du 3-butyl-2-propyl-1,5-pentanediol, du 2-méthyl-1,5-pentanediol (CAS : 42856-62-2), du 3-méthyl-1,5-pentanediol (MPD, CAS : 4457-71-0), du 2,2-diméthyl-1,3-pentanediol (CAS : 2157-31-5), du 2,2-diméthyl-1,5-pentanediol (CAS : 3121-82-2), du 3,3-diméthyl-1,5-pentanediol (CAS : 53120-74-4), du 2,3-diméthyl-1,5-pentanediol (CAS : 81554-20-3), du 2,2-diméthyl-1,3-propanediol (Néopentylglycol - NPG, CAS : 126-30-7), du 2,2-diethyl-1,3-propanediol (CAS : 115-76-4), du 2-méthyl-2-propyl-1,3-propanediol (CAS : 78-26-2), du 2-butyl-2-éthyl-1,3-propanediol (CAS : 115-84-4), du 2-méthyl-1,3-propanediol (CAS : 2163-42-0), du 2-benzyloxy-1,3-propanediol (CAS : 14690-00-7), du 2,2-dibenzyl-1,3-propanediol (CAS : 31952-16-6), du 2,2-dibutyl-1,3-propanediol (CAS : 24765-57-9), du 2,2-diisobutyl-1,3-propanediol, du 2,4-diéthyl-1,5-pentanediol, du 2-éthyl-1,6-hexanediol (CAS : 15208-19-2), du 2,5-diméthyl-1,6-hexanediol (CAS : 49623-11-2), du 5-méthyl-2-(1-methylethyl)-1,3-hexanediol (CAS : 80220-07-1), du 1,4-diméthyl-1,4-butanediol, du 1,5-hexanediol (CAS : 928-40-5), du 3-méthyl-1,6-hexanediol (CAS : 4089-71-8), du 3-tert-butyl-1,6-hexanediol (CAS : 82111-97-5), du 1,3-heptanediol (CAS : 23433-04-7), du 1,2-octanediol (CAS : 1117-86-8), du 1,3-octanediol (CAS : 23433-05-8), du 2,2,7,7-tétraméthyl-1,8-octanediol (CAS : 27143-31-3), du 2-méthyl-1,8-octanediol (CAS: 109359-36-6), du 2,6-diméthyl-1,8-octanediol (CAS : 75656-41-6), du 1,7-octanediol (CAS : 3207-95-2), du 4,4,5,5-tétraméthyl-3,6-dioxa-1,8-octanediol (CAS: 76779-60-7), du 2,2,8,8-tétraméthyl-1,9-Nonanediol (CAS : 85018-58-2), du 1,2-nonanediol (CAS : 42789-13-9), du 2,8-diméthyl-1,9-nonanediol (CAS : 40326-00-9), du 1,5-nonanediol (CAS : 13686-96-9), du 2,9-diméthyl-2,9-dipropyl-1,10-décanediol (CAS : 85018-64-0), du 2,9-dibutyl-2,9-diméthyl-1,10-decanediol (CAS : 85018-65-1), du 2,9-diméthyl-2,9-dipropyl-1,10-décanediol (CAS : 85018-64-0), du 2,9-diéthyl-2,9-diméthyl-1,10-décanediol (CAS : 85018-63-9), du 2,2,9,9-tétraméthyl-1,10-decanediol (CAS: 35449-36-6),

du 2-nonyl-1,10-décanediol (CAS : 48074-20-0), du 1,9-décanediol (CAS : 128705-94-2), du 2,2,6,6,10,10-hexaméthyl-4,8-dioxa-1,11-undécanediol (CAS : 112548-49-9), du 1-phényl-1,11-undécanediol (CAS : 109217-58-5), du 2-octyl-1,11-undécanediol (CAS : 48074-21-1), du 2,10-diéthyl-2,10-diméthyl-1,11-undécanediol (CAS : 85018-66-2), du 2,2,10,10-tétramethyl-1,11-undécanediol (CAS : 35449-37-7), du 1-phényl-1,11-undécanediol (CAS : 109217-58-5), du 1,2-undécanediol (CAS : 13006-29-6), du 1,2-dodécanediol (CAS : 1119-87-5), du 2,11-dodécanediol (CAS : 33666-71-6), du 2,11-diéthyl-2,11-diméthyl-1,12-dodécanediol (CAS : 85018-68-4), du 2,11-diméthyl-2,11-dipropyl-1,12-dodécanediol (CAS : 85018-69-5), du 2,11-dibutyl-2,11-diméthyl-1,12-dodécanediol (CAS : 85018-70-8), du 2,2,11,11-tétraméthyl-1,12-dodécanediol (CAS : 5658-47-9), du 1,11-dodécanediol (CAS : 80158-99-2), du 11-méthyl-1,7-dodécanediol (CAS : 62870-49-9), du 1,4-dodécanediol (CAS : 38146-95-1), du 1,3-dodécanediol (CAS : 39516-24-0), du 1,10-dodécanediol (CAS : 39516-27-3), du 2,11-diméthyl-2,11-dodécanediol (CAS : 22092-59-7), du 1,5-dodécanediol (CAS : 20999-41-1), du 6,7-dodécanediol (CAS : 91635-53-9), et de leurs mélanges.

De préférence, le diol est choisi dans le groupe constitué de l'éthylène glycol (CAS : 107-21-1), du 1,6-hexanediol, du 3-méthyl-1,5-pentanediol (MPD, CAS : 4457-71-0), du 2,2-diméthyl-1,3-propanediol (Néopentylglycol - NPG, CAS : 126-30-7), et de leurs mélanges.

De préférence, la composition (A-1-2) comprend (de préférence consiste en) le néopentyl glycol, l'éthylène glycol et le 1,6-hexanediol.

De préférence, la composition (A-1-2) comprend (de préférence consiste en) le 3-méthyl-1,5-pentanediol.

La composition (A-1-2) susmentionnée peut avoir un indice d'hydroxyle $I_{OH}$ supérieur ou égal à 500 mg KOH/g, de préférence supérieur ou égal à 700 mg KOH/g, encore plus préférentiellement supérieur ou égal à 900 mg KOH/g.

L'indice hydroxyle $I_{OH}$ de la composition (A-1-2) est le nombre de fonctions hydroxyle par gramme de composition (A-1-2), ledit nombre étant exprimé sous la forme d'équivalent en milligrammes de KOH par gramme de produit utilisé dans le dosage des fonctions hydroxyles, déterminé par titrimétrie selon la norme ISO 14900:2001. Dans le cas où la composition (A-1-2) est un mélange de diols, l'$I_{OH}$ peut également être calculé à partir des $I_{OH}$ connus de chacun des diols et de leur teneur pondérale respective dans ledit mélange.

*Monol(s)*

Selon l'invention, le(s) monol(s) de la composition (A-1-3) peut(vent) être tout alcool(s) comprenant un seul groupe hydroxyle, aromatique, aliphatique ou cycloaliphatique, saturé ou insaturé, linéaire ou ramifié, comprenant de 1 à 22 atomes de carbone, de préférence de 8 à 18 atomes de carbones.

De préférence, le monol est un monol aliphatique saturé choisi dans le groupe constitué du méthanol, de l'éthanol, du propanol, de l'isopropanol, du butanol, de l'isobutanol, du pentanol, de l'isopentanol, de l'hexanol, de l'heptanol, de l'alcool benzylique, du n-octanol, de l'éthyl-2-hexanol, du nonan-1-ol, du décan-1-ol, de l'undécanol, de l'undécènol, du dodécan-1-ol, de l'isotridécanol, des alcools gras saturés ou insaturés de C10 à C22, des alcools oxo en C8 à C13 et de leurs mélanges.

L'homme du métier connait typiquement les quantités à mettre en oeuvre des différents composés (diol(s), acide(s), et éventuellement monol(s)) pour obtenir une composition (A-1) ayant un $I_{OH}$ compris entre 4 et 24 mg KOH/g.

On peut par exemple faire réagir un(des) acide(s) dicarboxylique(s) avec un excès stoechiométrique de diol(s).

Typiquement, le ratio molaire diol(s)/monol(s) mis en oeuvre peut être choisi tel que la composition (A) comprenne au maximum 25% en poids de polymère de formule (II).

De préférence, le ratio molaire diol(s)/monol(s) est compris entre 80/20 et 100/0, de préférence entre 90/10 et 100/0.

*Composition (A-1)*

De préférence, la composition (A-1) est obtenue par réaction de polycondensation entre:

- un acide dicarboxylique saturé ou un mélange d'acides dicarboxyliques saturés dans une composition (A-1-1), ladite composition (A-1-1) ayant un indice d'acide $I_A$ supérieur à 200 mg KOH/g ; et
- un diol saturé ou un mélange de diols saturés dans une composition (A-1-2), ladite composition (A-1-2) ayant un indice d'hydroxyle $I_{OH}$ supérieur à 220 mg KOH/g ;

à condition qu'au moins un acide dicarboxylique saturé de la composition (A-1-1) ou au moins un diol saturé de la composition (A-1-2) soit ramifié.

De préférence, la composition (A-1) susmentionnée est obtenue par réaction de polycondensation entre:

- l'acide adipique ; et
- un mélange du néopentyl glycol, de l'éthylène glycol, et du 1,6-hexanediol ; ou entre :

- l'acide adipique ; et
- le 3-méthyl-1,5-pentanediol.

La composition (A-1) susmentionnée comprend un polyester diol amorphe de formule (III) susmentionnée ou un mélange de polyesters diols amorphes de formule (III) susmentionnée

En particulier, lorsque la composition (A-1-1) comprend un mélange d'acides dicarboxyliques et/ou lorsque la composition (A-1-2) comprend un mélange de diols, la composition (A-1) formée comprend alors un mélange de polyesters diols amorphes de formule (III) susmentionnée.

Selon l'invention, le polyester diol amorphe de formule (III) a un indice d'hydroxyle $I_{OH}$ compris entre 4 et 24 mg KOH/g, préférentiellement entre 7 et 24 mg KOH/g, de préférence entre 7 et 20 mg KOH/g, et en particulier entre 9 et 19 mg KOH/g. De préférence, l'indice d'hydroxyle $I_{OH}$ est compris entre 9 et 24 mg KOH/g.

Le polyester diol amorphe de formule (III) de la composition (A-1) peut avoir une viscosité mesurée à 23°C inférieure à 10 000 Pa.s, de préférence inférieure à 1000 Pa.s, préférentiellement inférieure à ou égale à 700 Pa.s, plus préférentiellement inférieure ou égale à 690 Pa.s, encore plus préférentiellement inférieure ou égale à 500 Pa.s, en particulier inférieure ou égale à 250 Pa.s, par exemple inférieure ou égale à 190 Pa.s, notamment inférieure ou égale à 100 Pa.s.

Le polyester diol amorphe de formule (III) peut avoir une température de transition vitreuse $T_g$ inférieure à 0°C, de préférence inférieure ou égale à -20°C, de préférence inférieure ou égale à -40°C, préférentiellement inférieure ou égale à -50°C, en particulier inférieure ou égale à -60°C, par exemple inférieure ou égale à -64°C.

La température de transition vitreuse (Tg) peut être mesurée de manière bien connue par exemple selon la norme ASTM E1356-08.

Le polyester diol amorphe de formule (III) peut avoir une masse molaire moyenne en nombre supérieure ou égale à 5 500 g/mol, de préférence supérieure ou égale à 6 000 g/mol, en particulier strictement supérieure à 6 000 g/mol, préférentiellement supérieure ou égale à 8 000 g/mol, en particulier supérieure ou égale à 9 000 g/mol, par exemple supérieure ou égale à 10 000 g/mol, avantageusement supérieure ou égale 12 000 g/mol, et en particulier supérieure ou égale 18 000 g/mol.

La masse molaire moyenne en nombre du polyester diol amorphe de formule (III) peut être déterminée à partir de son $I_{OH}$ et de sa fonctionnalité.

Parmi les polyesters diols amorphes de formule (III), on peut par exemple citer le Dynacoll® 7250 commercialisé par EVONIK (polyester polyol ayant une viscosité de 180 Pa.s à 23°C, une masse molaire moyenne en nombre Mn égale à 5 500 g/mol, et une $T_g$ égale à - 50°C), le KURARAY® P-6010 commercialisé par KURARAY (polyester polyol ayant une viscosité de 68 Pa.s à 23°C, une masse molaire moyenne en nombre égale à 6 000 g/mol, et une $T_g$ égale à -64°C), ou le KURARAY® P-10010 commercialisé par KURARAY (polyester polyol ayant une viscosité de 687 Pa.s à 23°C, une masse molaire moyenne en nombre égale à 10 000 g/mol).

La composition (A-1) peut comprend en outre au moins un polyester monol amorphe de formule (IV) suivante :

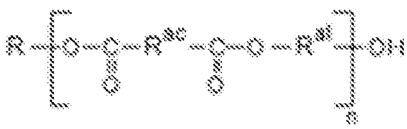

(IV)

telle que définie ci-dessus.

Dans la formule (IV) ci-dessus, R peut représenter un radical hydrocarboné monovalent comprenant de 1 à 22 atomes de carbone, de préférence R représente un radical méthyle.

Le polyester monol amorphe de formule (IV) peut avoir un indice d'hydroxyle $I_{OH}$ compris entre 2 et 12 mg KOH/g, de préférence entre 4,5 et 12 mg KOH/g ;

Le polyester monol amorphe de formule (IV) peut avoir une viscosité inférieure à 1000 Pa.s à 23°C, préférentiellement inférieure à 700 Pa.s, encore plus préférentiellement inférieure à 500 Pa.s.

Le polyester monol amorphe de formule (IV) peut avoir une température de transition vitreuse $T_g$ inférieure à 0°C, de préférence inférieure ou égale à -20°C, de préférence inférieure ou égale à -40°C, préférentiellement inférieure ou égale à -50°C, en particulier inférieure ou égale à -60°C.

De préférence, lorsque la composition (A-1) comprend au moins un polyester monol amorphe de formule (IV) susmentionnée, ladite composition (A-1) est obtenue par réaction de polycondensation entre :

- un acide dicarboxylique saturé ou un mélange d'acides dicarboxyliques saturés dans une composition (A-1-1), ladite composition (A-1-1) ayant un indice d'acide $I_A$ supérieur à 200 mg KOH/g ; et

- un diol saturé ou un mélange de diols saturés dans une composition (A-1-2), ladite composition (A-1-2) ayant un indice d'hydroxyle $I_{OH}$ supérieur à 220 mg KOH/g ; et
- un monol ou un mélange de monols dans une composition (A-1-3).

La composition (A-1) peut comprendre :

- de 75% à 100%, en particulier de 95% à 100% en poids d'au moins un polyester diol de formule (III) telle que définie ci-dessus ; et
- de 0% à 25%, en particulier de 0% à 5% en poids d'au moins un polyester monol de formule (IV) susmentionnée.

Selon un mode de réalisation, la composition (A-1) a un indice d'hydroxyle $I_{OH}$ compris entre 7 et 24 mg KOH/g, de préférence entre 7 et 20 mg KOH/g, et en particulier entre 9 et 19 mg KOH/g.

**2ème étape** : préparation d'une composition (A) comprenant au moins 75% poids des polyuréthanes à terminaisons alkoxysilanes de formule (I) :

**Variante (i) :** Selon cette première variante, la composition (A-1) susmentionnée peut être mise en réaction avec l'isocyanatosilane de formule (VII) :

$$NCO\text{-}R^3\text{-}Si(R^4)_p(OR^5)_{3-p} \qquad (VII)$$

à raison d'une quantité correspondant à un rapport équivalent molaire des nombres de fonctions NCO/OH comprise entre 0,90 et 1,05 et de préférence égal à environ 1.

Les isocyanatosilanes de formule (VII) susmentionnée sont largement disponibles dans le commerce. On peut notamment citer le SILQUEST® A-LINK 35 soit le (3-isocyanatopropyl)triméthoxysilane) disponible auprès de MOMENTIVE, le SILQUEST® A-LINK 25 soit le (3-isocyanatopropyl)triéthoxysilane) disponible auprès de MOMENTIVE, le (3-isocyanatopropyl)méthyldiméthoxysilane disponible auprès de GELEST, le GENIOSILOXL 42 soit le (3-isocyanatométhyl)méthyldiméthoxysilane disponible auprès de WACKER et le GENIOSIL® XL 43 soit le (3-isocyanatométhyl)triméthoxysilane disponible auprès de WACKER.

On obtient ainsi les polyuréthanes à terminaisons alkoxysilanes de formule (I) compris à raison d'au moins 75 % en poids dans la composition (A), de préférence à raison d'au moins 90% en poids, préférentiellement d'au moins 95% en poids dans la composition (A).

Ces modes préférés sont typiquement obtenus en utilisant l'isocyanatosilane ayant la formule (VII) appropriée.

Cette étape est en particulier conduite dans des conditions anhydres, de manière à éviter l'hydrolyse des groupes alkoxysilanes. Un domaine de température typique pour la mise en oeuvre de cette étape réactionnelle est de 30°C à 120°C, et plus particulièrement de 60°C à 105°C.

**Variante (ii)** :

Selon cette seconde variante, la composition (A) peut être obtenue en deux étapes à partir de la composition (A-1) :

Etape (ii-A) : Préparation d'une composition (A-2) comprenant au moins 85% en poids d'au moins un polyuréthane à terminaisons hydroxyles

En particulier, la composition (A-1) obtenue précédemment est mise en réaction avec le diisocyanate de formule (V) suivante :

$$NCO\text{-}R^1\text{-}NCO \qquad (V)$$

dans des quantités correspondant à un rapport équivalent molaire des nombres de fonctions NCO/OH compris entre 0,3 et 0,7 et de préférence égal à environ 0,5 ;
de manière à obtenir les polyuréthanes à terminaisons hydroxyles de formule (VI) suivante :

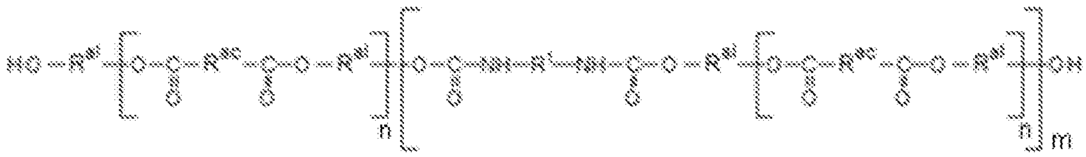

(VI)

dans laquelle, de préférence, m est inférieur ou égal à 10.

Toutefois, il peut rester également, à l'issue de cette 3ème étape, des polyesters diols de formule (III) de la composition (A-1) initiale non réagis, de sorte que la composition (A-2) peut comprendre également une quantité résiduelle desdits polyesters diols.

Les polyuréthanes à terminaison hydroxyle de formule (VI) sont compris de préférence dans la composition (A-2) à raison d'au moins 90% poids, de préférence d'au moins 95 % poids, par rapport au poids total de ladite composition (A-2).

Selon un mode de réalisation, le radical $R^1$ est choisi parmi l'un des radicaux divalents suivants dont les formules ci-dessous font apparaître les 2 valences libres :

- a) le radical divalent dérivé de l'isophorone diisocyanate (IPDI) :

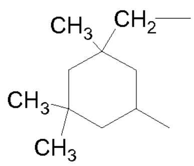

- b)

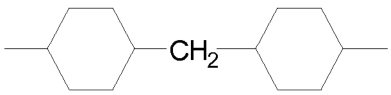

- c) le radical dérivé des 2,4- et 2,6-toluène diisocyanate (TDI)

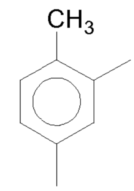

ou

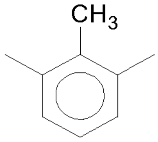

- d) le radical dérivé des 4,4'- et 2,4'-diphénylméthane diisocyanate (MDI)

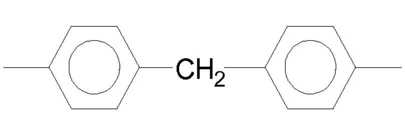

ou

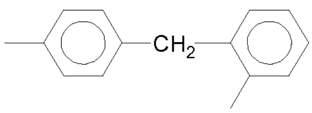

- e) le radical dérivé du m-xylylène diisocyanate (m-XDI)

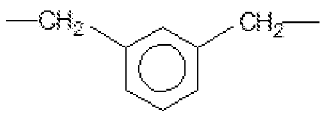

- f) le radical dérivé de l'hexamethylène diisocyanate (HDI)

$$-(CH_2)_6-$$

De préférence, le radical $R^1$ est le radical divalent dérivé de l'isophorone diisocyanate ou du xylylène diisocyanate.

Les polyuréthanes à terminaisons hydroxyles de formule (VI) susmentionnée peuvent avoir une viscosité, mesurée à 25°C, inférieure à 20 000 Pa.s, préférentiellement inférieure à 1 600 Pa.s, de préférence inférieure ou égale à 1 000 Pa.s.

Etape (ii-B) : Obtention de la composition (A) comprenant au moins 75% poids des polyuréthanes à terminaisons alkoxysilanes de formule (I) :

La composition (A-2) de polyuréthanes à terminaison hydroxyle obtenue à la 2ème étape, peut être mise en réaction avec l'isocyanatosilane de formule (VII) :

$$NCO-R^3-Si(R^4)_p(OR^5)_{3-p} \qquad (VII)$$

à raison d'une quantité correspondant à un rapport équivalent molaire des nombres de fonctions NCO/OH comprise entre 0,90 et 1,05 et de préférence égal à environ 1.

Les isocyanatosilanes de formule (VII) susmentionnée sont largement disponibles dans le commerce. On peut notamment citer le SILQUEST® A-LINK 35 soit le (3-isocyanatopropyl)triméthoxysilane) disponible auprès de MOMENTIVE, le SILQUEST® A-LINK 25 soit le (3-isocyanatopropyl)triéthoxysilane) disponible auprès de MOMENTIVE, le (3-isocyanatopropyl)méthyldiméthoxysilane disponible auprès de GELEST, le GENIOSIL® XL 42 soit le (3-isocyanatométhyl)méthyldiméthoxysilane disponible auprès de WACKER et le GENIOSIL® XL 43 soit le (3-isocyanatométhyl)triméthoxysilane disponible auprès de WACKER.

On obtient ainsi les polyuréthanes à terminaisons alkoxysilanes de formule (I) compris à raison d'au moins 75 % en poids dans la composition (A), de préférence à raison d'au moins 90% en poids, préférentiellement d'au moins 95% en poids dans la composition (A).

Ces modes préférés sont typiquement obtenus en utilisant l'isocyanatosilane ayant la formule (VII) appropriée.

Les étapes (ii-A) et (ii-B) décrites ci-dessus sont en particulier conduites dans des conditions anhydres, de manière à éviter l'hydrolyse des groupes alkoxysilanes. Un domaine de température typique pour la mise en oeuvre de ces étapes réactionnelles est de 30°C à 120°C, et plus particulièrement de 60°C à 105°C.

L'étape (ii-A) du procédé est avantageusement mise en oeuvre en présence d'un catalyseur organométallique.

## *Composition (A)*

La composition (A) susmentionnée peut comprendre :

- de 75% à 100%, de préférence de 85% à 100%, préférentiellement de 90% à 100%, avantageusement de 95% à 100% en poids de polyuréthane comprenant 2 groupes terminaux de type alkoxysilane hydrolysables de formule (I) susmentionnée; et
- de 0% à 25% en poids, de préférence de 0% à 15%, préférentiellement de 0% à 10%, avantageusement de 0% à 5% en poids d'au moins un polyuréthane comprenant 1 groupe terminal de type alkoxysilane hydrolysable de formule (II) susmentionnée.

De préférence, la composition (A) ne comprend pas de polyuréthane de formule (II).

La composition (A) susmentionnée peut avoir une viscosité, mesurée à 100°C, inférieure à 10 000 Pa.s, préférentiellement inférieure ou égale à 1 000 Pa.s, de préférence inférieure ou égale à 300 Pa.s, plus préférentiellement inférieure ou égale à 200 Pa.s.

Selon l'invention, la masse molaire moyenne en nombre du polyuréthane comprenant deux groupes terminaux de type alkoxysilane hydrolysables de formule (I) peut être comprise entre 500 g/mol et 50 000 g/mol, de préférence entre 600 g/mol et 30 000 g/mol, préférentiellement entre 4 000 g/mol et 25 000 g/mol, par exemple entre 8 000 g/mol et 25 000 g/mol.

Le polyuréthane comprenant deux groupes terminaux de type alkoxysilane hydrolysables de formule (I) susmentionnée peut avoir une viscosité, mesurée à 25°C, inférieure ou égale à 1 000 Pa.s, de préférence inférieure ou égale à 300 Pa.s, préférentiellement inférieure ou égale à 200 Pa.s.
Le polyuréthane comprenant deux groupes terminaux de type alkoxysilane hydrolysables de formule (I) susmentionnée peut avoir une viscosité, mesurée à 100°C, inférieure à 10 000 Pa.s, préférentiellement inférieure ou égale à 1 000 Pa.s, de préférence inférieure ou égale à 300 Pa.s, plus préférentiellement inférieure ou égale à 200 Pa.s.
Selon un mode de réalisation, dans la formule (I) susmentionnée, m est inférieur ou égal à 10.
Selon un autre mode de réalisation, dans la formule (I) susmentionnée, m est égal à 0.
Selon un mode de réalisation préféré, dans la formule (I) susmentionnée :

- $R^3$ est le radical divalent méthylène ou n-propylène ;
- $R^4$ et $R^5$ représentent chacun le radical méthyle ou éthyle ; et/ou
- p est égal 0 ou 1.

Selon un mode de réalisation préféré, dans la formule (I) susmentionnée :

- $R^3$ est le radical n-propylène, et
- le groupe $-Si(R^4)_p(OR^5)_{3-p}$ est le radical triméthoxysilyle.

Dans la formule (I) susmentionnée, lorsqu'il y a plusieurs radicaux $R^{al}$, ceux-ci peuvent être identiques ou différents. Typiquement, lorsque la composition (A-1-2) comprend un mélange de diol(s), la nature de $R^{al}$ peut varier dans le polyuréthane de formule (I) susmentionnée.
Dans la formule (I) susmentionnée, lorsqu'il y a plusieurs radicaux $R^{ac}$, ceux-ci peuvent être identiques ou différents. Typiquement, lorsque la composition (A-1-1) comprend un mélange d'acide(s) dicarboxylique(s), la nature de $R^{ac}$ peut varier dans le polyuréthane de formule (I) susmentionnée.
$R^{al}$ et $R^{ac}$ sont notamment définis selon les diols et acides dicarboxyliques, décrits précédemment, mis en oeuvre dans la réaction de polycondensation.
De préférence, $R^{ac}$ est issu d'un acide dicarboxylique ayant un indice d'acide $I_A$ supérieur à 200 mg KOH/g, de préférence supérieur ou égal à 300 mg KOH/g, de préférence supérieur ou égal à 400 mg KOH/g, préférentiellement supérieur ou égal à 500 mg KOH/g, en particulier supérieur ou égal à 700 mg KOH/g, et avantageusement supérieur ou égal à 800 mg KOH/g.
De préférence, $R^{al}$ est issu d'un diol ayant un indice d'hydroxyle $I_{OH}$ supérieur à 220 mg KOH/g, en particulier supérieur ou égal à 500 mg KOH/g, de préférence supérieur ou égal à 700 mg KOH/g, encore plus préférentiellement supérieur ou égal à 900 mg KOH/g.

## 2. <u>Résine tackifiante compatible (B)</u>

En ce qui concerne la ou les résines tackifiantes (B) qui sont comprises dans la composition selon l'invention, on entend désigner par les termes "résine tackifiante compatible" une résine tackifiante qui, lorsqu'elle est mélangée dans les proportions 50%/50% en poids avec la composition (A), donne un mélange substantiellement homogène.
La composition selon l'invention peut comprendre de 15% à 70% en poids d'une résine tackifiante compatible (B), de préférence de masse molaire moyenne en nombre comprise entre 200 g/mol et 50 000 g/mol.
Les résines (B) sont avantageusement choisies parmi :

- (i) les résines susceptibles d'être obtenues par polymérisation d'hydrocarbures terpéniques et de phénols, en présence de catalyseur(s) de Friedel-Crafts ;
- (ii) les résines susceptibles d'être obtenues par polymérisation d'alpha-méthyl styrène, et éventuellement par réaction avec des phénols ;
- (iii) les colophanes d'origine naturelle ou modifiées (telles que par exemple la colophane extraite de la gomme de pins, la colophane de bois extraite des racines de l'arbre) et leurs dérivés hydrogénés, dimérisés, polymérisés ou estérifiés par des monoalcools ou des polyols (comme par exemple le glycérol ou le pentaérythritol) ;
- (iv) les résines acryliques ayant en particulier une viscosité à 100°C inférieure à 100 Pa.s ;
- (v) et leurs mélanges.

Selon un mode de réalisation préféré, la résine tackifiante (B) est choisie parmi les résines de type (i).
De telles résines sont disponibles commercialement, et parmi celles de type (i), (ii), (iii) ou (iv), on peut citer par exemple les produits suivants :

- résine de type (i) : DERTOPHENE ® 1510 disponible auprès de la société DRT possédant une masse moyenne molaire en nombre $M_n$ d'environ 870 Da ; DERTOPHENE ® H150 disponible auprès de la société DRT possédant une masse moyenne molaire en nombre $M_n$ d'environ 630 Da ; SYLVAREZ ® TP 95 disponible auprès de la société ARIZONA CHEMICAL ayant une masse molaire moyenne en nombre d'environ 1200 Da ;
- résine de type (ii) : NORSOLENE ® W100 disponible auprès de la société CRAY VALLEY, obtenue par polymérisation d'alpha-méthyl styrène sans action de phénols, ayant une masse molaire moyenne en nombre de 900 Da ; SYLVAREZ ® 510 qui est disponible auprès de la société ARIZONA CHEMICAL ayant une masse molaire moyenne en nombre d'environ 1740 Da, dont le procédé d'obtention comprend l'ajout de phénols ;
- résine de type (iii) : SYLVALITE ® RE 100 qui est un ester de colophane et de pentaérythritol disponible auprès de la société ARIZONA CHEMICAL, et dont la masse molaire moyenne en nombre est d'environ 1700 Da.

Les masses molaires moyennes en nombre des résines peuvent être mesurées selon des méthodes bien connues de l'homme du métier, par exemple par chromatographie d'exclusion stérique en utilisant un étalon de type polystyrène.

La résine tackifiante (B) peut avoir un indice hydroxyle $I_{OH}$ allant de 10 à 300 mg KOH/g, de préférence allant de 100 à 200 mg KOH/g, préférentiellement allant de 140 à 160 mg KOH/g. En particulier, la résine tackifiante (B) a un indice hydroxyle valant 145 mg KOH/g.

L'indice hydroxyle de la résine tackifiante représente le nombre de fonctions hydroxyles par gramme de résine tackifiante, et est exprimée dans la demande sous la forme du nombre équivalent de milligrammes de potasse par gramme de résine tackifiante (mg KOH/g) pour le dosage des fonctions hydroxyles.

La teneur en résine(s) tackifiante(s) (B) peut représenter au moins 25% en poids total de la composition adhésive de l'invention, de préférence de 25% à 79% en poids, préférentiellement de 30% à 70% en poids, avantageusement de 35% à 60% en poids, encore plus préférentiellement de 40% à 55% en poids du poids total de ladite composition adhésive.

### 3. Catalyseur de réticulation (C)

Le catalyseur de réticulation (C) utilisable dans la composition selon l'invention peut être tout catalyseur connu par l'homme du métier pour la condensation de silanol. On peut citer comme exemples de tels catalyseurs des dérivés organiques du titane comme l'acétyl acétonate de titane (disponible commercialement sous la dénomination TYZOR ® AA75 auprès de la société DUPONT), de l'aluminium comme le chélate d'aluminium (disponible commercialement sous la dénomination K-KAT® 5218 auprès de la société KING INDUSTRIES), des amines comme le 1,8-diazobicyclo (5.4.0) undécène-7 ou DBU.

La composition adhésive de l'invention comprend de 0,01% à 5%, de préférence de 0,01% à 3%, préférentiellement de 0,1% à 3% en poids, par exemple de 1% à 3% en poids d'un catalyseur de réticulation (C), par rapport au poids totale de ladite composition adhésive.

La composition adhésive réticulable à chaud selon l'invention comprend de préférence :

- (a) de 20% à 75 %, de préférence de 30% à 64%, préférentiellement de 45% à 55% en poids de composition (A), ladite composition (A) telle que définie ci-dessus comprenant :
    - de 75% à 100%, de préférence de 85% à 100%, préférentiellement de 90% à 100% en poids de polyuréthane comprenant 2 groupes terminaux de type alkoxysilane hydrolysables de formule (I) ; et
    - de 0% à 25% en poids, de préférence de 0% à 15% en poids d'au moins un polyuréthane comprenant 1 groupe terminal de type alkoxysilane hydrolysable de formule (II) ; et
- (b) de 15% à 79%, de préférence de 35% à 69%, préférentiellement de 40% à 60% en poids de résine tackifiante (B) telle que définie ci-dessus, et
- (c) de 0,01% à 5%, de préférence de 0,1% à 3%, préférentiellement de 1% à 3% en poids de catalyseur de réticulation (C) tel que défini ci-dessus ;
- (d) de 0% à 20%, de préférence de 0% à 15%, préférentiellement de 0% à 10% en poids d'au moins un additif choisi dans le groupe constitué des solvants, des pigments, des colorants, des promoteurs d'adhérence, des plastifiants, des stabilisants UV, des antioxydants, des paillettes, des matériaux fluorescents, des additifs rhéologiques, des agents anti-dessicants, des charges minérales ou organiques, et de leurs mélanges.

### 4. Autres ingrédients de la composition selon l'invention

A titre optionnel, la composition selon l'invention peut également inclure des polymères thermoplastiques souvent utilisés dans la préparation des HMPSA, tels que l'Ethylène Vinyl Acétate (EVA) ou des copolymères blocs styréniques.

La composition adhésive réticulable à chaud selon l'invention peut en outre comprendre jusqu'à 3 % en poids d'un dérivé alkoxysilane hydrolysable, en tant qu'agent dessicant, et de préférence un dérivé de triméthoxysilane. Un tel agent prolonge avantageusement la durée de conservation de la composition selon l'invention durant le stockage et le transport, avant son utilisation. On peut citer par exemple le gamma-métacryloxypropyltriméthoxysilane disponible sous la dénomination commerciale SILQUEST ® A-174 auprès de la société MOMENTIVE PERFORMANCES MATERIALS.

La composition selon l'invention peut aussi inclure un plastifiant tel qu'un phtalate ou un benzoate, une huile paraffinique et naphténique (comme le PRIMOL ® 352 de la société ESSO) ou encore une cire d'un homopolymère de polyéthylène (comme l'A-C ® 617 de HONEYWELL), ou une cire d'un copolymère de polyéthylène et d'acétate de vinyle, ou encore des pigments, des colorants ou des charges.

Enfin, une quantité de 0,1% à 2 % d'un ou plusieurs stabilisants ou antioxydants est de préférence incluse dans la composition selon l'invention. Ces composés sont introduits pour protéger la composition d'une dégradation résultant d'une réaction avec de l'oxygène qui est susceptible de se former par action de la chaleur ou de la lumière. Ces composés peuvent inclure des antioxydants qui piègent les radicaux libres, comme par exemple les IRGANOX ® 245 et IRGANOX ® 1010, ou IRGAFOS ® 168. Ces antioxydants peuvent être utilisés seuls ou en combinaison avec d'autres antioxydants ou des stabilisants UV.

La composition selon l'invention peut contenir au moins une charge, typiquement organique et/ou inorganique, de préférence en une teneur comprise entre 1% et 20% en poids de la composition totale.

A titre de charge(s) organique(s), on peut utiliser n'importe quelle(s) charge(s) organique(s) et notamment polymérique(s) typiquement utilisée(s) dans le domaine des compositions adhésive.

On peut utiliser par exemple du polychlorure de vinyle (PVC), des polyoléfines, du caoutchouc, de l'éthylène vinyl acétate (EVA), des fibres aramides telles que le KEVLAR ®.

On peut utiliser également des microsphères creuses en polymère thermoplastique expansibles ou non expansibles. On peut notamment citer des microsphères creuses en chlorure de vinylidène/acrylonitrile.

La taille moyenne de particule de la (des) charge(s) utilisable(s) est de préférence inférieure ou égale à 10 microns, plus préférentiellement inférieure ou égale à 3 microns, afin d'éviter leur sédimentation dans la composition selon l'invention au cours de son stockage.

La taille moyenne de particule est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN.

De préférence, la charge est une charge inorganique.

Les charges inorganiques peuvent se présenter sous la forme de particules de géométrie diverse. Elles peuvent être par exemple sphériques, fibreuses, ou présenter une forme irrégulière.

Selon un mode de réalisation, la charge est choisie parmi le sable, les billes de verre, le verre, le quartz, la barite, l'alumine, le mica, le talc, les carbonates de métaux alcalin ou alcalino-terreux, et leurs mélanges.

De préférence, la charge est choisie parmi le sable et les billes de verre, et le carbonate de calcium.

Le sable qui peut être utilisé dans la présente invention a de préférence une granulométrie allant de 0,1 à 400 $\mu$m, préférentiellement de 1 à 400 $\mu$m, de préférence encore de 10 à 350 $\mu$m, de préférence encore de 50 à 300 $\mu$m.

Les billes de verre qui peuvent être utilisées dans la présente invention ont de préférence une granulométrie allant de 0,1 à 400 $\mu$m, préférentiellement de 1 à 400 $\mu$m, de préférence encore de 10 à 350 $\mu$m, de préférence encore de 50 à 300 $\mu$m.

Le carbonate de calcium peut être rendu hydrophobe, par exemple avec du stéarate de calcium ou un analogue permettant de conférer une hydrophobie partielle ou totale aux particules de carbonate de calcium. Le caractère plus ou moins hydrophobe du carbonate de calcium peut avoir un impact sur la rhéologie de la composition. De plus, le revêtement hydrophobe peut permettre d'empêcher que le carbonate de calcium n'absorbe les constituants de la composition et ne les rende inefficaces. Le revêtement hydrophobe du carbonate de calcium peut représenter de 0,1% à 3,5% en poids, par rapport au poids total de carbonate de calcium.

Le carbonate de calcium qui peut être utilisé dans la présente invention a de préférence une granulométrie allant de 0,1 à 400 $\mu$m, de préférence encore de 1 à 400 $\mu$m, préférentiellement de 10 à 350 $\mu$m, de préférence encore de 50 à 300 $\mu$m.

A titre d'exemple de carbonate de calcium, on peut citer le MIKHART® 1T (disponible auprès de la société LA PROVENCALE).

Lorsqu'un pigment est présent dans la composition, sa teneur est de préférence inférieure ou égale à 20% en poids, de préférence encore inférieure ou égale à 15% en poids, par rapport au poids total de la composition. Lorsqu'il est présent, le pigment peut par exemple représenter de 0,1% à 20% en poids, de préférence de 0,5% à 10% en poids

du poids total de la composition.

Les pigments peuvent être des pigments organiques ou inorganiques.

Par exemple, le pigment est $TiO_2$, en particulier le KRONOS® 2160 commercialisé par la société KRONOS ou encore le pigment peut être du noir de carbone, en particulier le PRINTEX® 25 commercialisé par la société EVONIK.

## 5. Préparation de la composition selon l'invention

La composition adhésive réticulable à chaud selon l'invention peut être préparée par un procédé qui comprend :

- une étape de mélange à l'abri de l'air, de préférence sous atmosphère inerte, de la composition (A) susmentionnée avec la(les) résine(s) tackifiante(s) (B), à une température comprise entre 50°C et 170°C, de préférence entre 100°C et 170°C, puis
- une étape de refroidissement dudit mélange à une température allant de 50°C à 90°C, et avantageusement d'environ 70 °C, puis
- une étape d'incorporation dans ledit mélange du catalyseur (C) et, le cas échéant, des autres composants optionnels.

On obtient avantageusement ainsi une composition dont la viscosité Brookfield mesurée à 100°C est inférieure ou égale à 1 000 Pa.s, de préférence inférieure à 500 Pa.s, préférentiellement inférieure ou égale à 100 Pa.s, plus préférentiellement inférieure ou égale à 50 Pa.s, par exemple inférieure ou égale à 20 Pa.s, la rendant apte à son enduction sur une couche support. Ladite viscosité est mesurée, selon la norme DIN ISO 2555, par un viscosimètre Brookfield RTV équipé du système Thermosel destiné aux mesures de viscosité à haute température, muni d'une aiguille A27 tournant à une vitesse adaptée à la sensibilité du capteur (en moyenne 10 tr/min).

La composition adhésive selon l'invention est avantageusement stable dans le domaine d'application de ladite composition adhésive, et notamment à des températures élevées, permettant avantageusement une meilleure durabilité de ladite composition.

Les compositions adhésives selon l'invention conduisent avantageusement, après enduction sur un support puis réticulation, à un joint de colle (assurant la fixation de l'article auto-adhésif ainsi obtenu sur un substrat) qui garde la cohésion requise sur un large domaine de température, notamment dans une gamme allant de -60°C à plus de 200°C. Ce maintien de la cohésion permet avantageusement à l'article auto-adhésif obtenu de maintenir son pouvoir adhésif sur ce large domaine de température, notamment à température élevée, tel qu'à une température supérieure ou égale à 140°C, voire supérieure ou égale à 160°C, avantageusement supérieure ou égale à 180°C.

La composition adhésive selon l'invention conduit avantageusement à un article auto-adhésif présentant un bon compromis entre bon pouvoir adhésif, bon pouvoir collant immédiat, bonne résistance aux cisaillements, et/ou bonne cohésion sur une large gamme de température, notamment à température élevée, tel qu'à une température supérieure ou égale à 140°C, voire supérieure ou égale à 160°C.

La composition adhésive selon l'invention conduit à un article auto-adhésif présentant avantageusement une résistance aux cisaillements élevée, par exemple sous une contrainte supérieure à 3kg, de préférence supérieure à 5kg, voire supérieure ou égale à 6 kg, sur une large gamme de température, notamment à température élevée, tel qu'à une température supérieure ou égale à 140°C, voire supérieure ou égale à 160°C, ou avantageusement supérieure ou égale à 180°C.

La composition adhésive présente avantageusement une bonne compatibilité avec les résines tackifiantes, et elle est avantageusement facile à appliquer sur un support. La composition adhésive selon l'invention permet avantageusement un bon mouillage, et donc une meilleure adhésion sur substrat.

## 6. Article auto-adhésif

La présente invention a également pour objet un article auto-adhésif comprenant une couche support revêtue d'une couche auto-adhésive, ladite couche auto-adhésive consistant en une composition adhésive selon l'invention à l'état réticulé.

Au sens de la présente invention, le terme « article auto-adhésif » inclut tout article qui peut être collé sur une surface seulement par l'action d'une pression avec la main ou un équipement, sans l'utilisation de colles ou adhésifs supplémentaires. L'expression « article auto-adhésif » comprend également l'expression « article adhésif sensible à la pression » ou « article PSA » (« Pressure Sensitive Adhesive article » en anglais). Ces articles ont notamment pour but d'être appliqués sur une surface à coller afin de rapprocher, de maintenir, de fixer, ou simplement d'immobiliser, d'exposer des formes, logos, images ou informations. Ces articles peuvent être utilisés dans de nombreux domaines, tels que le domaine médical, l'habillement, l'emballage, l'automobile (par exemple pour la pose de logos, le lettrage, l'insonorisation intérieure, l'habillage intérieur, les collages dans l'habitacle) ou la construction (par exemple pour l'isolation phonique et thermique, l'assemblage de fenêtres). Ils peuvent être façonnés en fonction de leur application finale, par exemple

sous la forme de rubans, tels que les rubans à usage industriel, les rubans de bricolage ou à usage de fixation sur chantiers, les rubans simple ou double face, ou sous la forme d'étiquettes, de bandages, de pansements, de patchs ou de films graphiques.

Selon un mode de réalisation, l'article auto-adhésif est un système multicouche auto-adhésif, et en particulier une étiquette ou un ruban auto-adhésif, pouvant être à simple ou double face.

Le matériau utilisable pour la couche support peut par exemple être tout type de support rigide ou souple. On peut par exemple citer les supports de type mousses, feutrines, support non tissés, plastiques, membranes, les papiers ou un film d'un matériau polymère à une ou plusieurs couches.

La couche support est en matériau par exemple choisi parmi :

- les polyoléfines, telles que le polyéthylène, dont le polyéthylène haute densité, le polyéthylène faible densité, le polyéthylène faible densité linéaire et le polyéthylène ultra faible densité linéaire, le polypropylène et les polybutylènes,
- le polystyrène,
- le caoutchouc naturel ou synthétique,
- les copolymères vinyliques, tels que le polychlorure de vinyle, plastifié ou non plastifié, et les poly(acétate de vinyle),
- les copolymères oléfiniques, tels que les copolymères éthylène/méthacrylate, les copolymères éthylène/acétate de vinyle, les copolymères acrylonitrile/butadiène/styrène, et les copolymères éthylène/propylène,
- les polymères et les copolymères acryliques,
- les polyuréthanes,
- les polyéthers,
- les polyesters, et
- les mélanges de ceux-ci.

De préférence, la couche support est à base de polymères acryliques, de Polyéthylène (PE), Polypropylène (PP) orienté, non orienté ou bi-orienté, Polyimide, Polyuréthane, Polyester tel que le Polyéthylène téréphtalate (PET), ou de papier.

Selon un mode de réalisation, l'article auto-adhésif obtenu à partir de la composition adhésive selon l'invention comprend une couche support permanente revêtue d'une couche adhésive. De préférence, la couche adhésive est en outre revêtue d'un film plastique ou papier protecteur anti-adhérent, de préférence siliconé.

A titre d'alternative au film protecteur anti-adhérent, la face arrière de la couche support permanente qui n'est pas revêtue de la couche adhésive, peut avoir une surface anti-adhérente, par exemple une couche protectrice siliconée.

Selon un mode de réalisation, la couche support permanente est revêtue sur ses deux faces par une composition adhésive, qui peut être identique ou différente, au moins une des deux compositions adhésives étant selon l'invention.

De préférence, la couche support présente une épaisseur allant de 10 microns à 50 mm, de préférence encore allant de 10 microns à 20 mm, de préférence allant de 20 microns à 10 mm, de préférence encore allant de 20 microns à 1 mm.

Dans certains cas spécifiques, il est nécessaire de procéder à un traitement de surface de la couche support pour augmenter l'accroche de la couche adhésive lors de l'étape d'enduction sur celle-ci.

L'article auto-adhésif selon l'invention peut ainsi coller deux substrats. Le substrat sur lequel l'article auto-adhésif est destiné à être appliqué (désigné par « substrat à coller ») peut être flexible ou rigide. En particulier, il peut présenter les mêmes propriétés de flexibilité que la couche support décrite ci-dessus, de manière à être enroulé et conditionné sous la forme d'une bobine, par exemple telle que décrite précédemment.

Alternativement, le substrat à coller peut être rigide. Dans ce cas, le substrat ne peut être enroulé et conditionné sous la forme d'une bobine, par exemple telle que décrite précédemment.

Le substrat à coller peut par exemple être choisi parmi le béton, le papier, les substrats de type polyoléfines...

Selon un mode de réalisation de l'invention, l'article auto-adhésif comprend en outre une couche anti-adhérente protectrice (« release liner » en anglais).

Selon un mode de réalisation, ladite couche anti-adhérente est appliquée sur la couche adhésive, après réticulation de la composition adhésive.

La couche support peut être recouverte sur une de ses deux faces, la face arrière qui n'est pas revêtue de la couche adhésive, par une couche protectrice anti-adhérente, par exemple par un film siliconé. De cette façon, l'article auto-adhésif peut être enroulé sur lui-même puis déroulé sans problème grâce à l'absence d'adhésion de la couche adhésive sur la face siliconée.

L'article auto-adhésif selon l'invention peut être susceptible d'être obtenu par le procédé comprenant les étapes suivantes :

(a) le conditionnement de la composition adhésive selon l'invention telle que définie précédemment à une température allant de 20 à 130°C ; puis

(b) l'enduction par la composition adhésive obtenue à l'étape (a) d'une surface porteuse ; puis

(c) la réticulation de la composition adhésive enduite, par chauffage à une température allant de 20 à 200°C en particulier dans un environnement gazeux où des molécules d'eau sont présentes entre 10 et 200 mg par $m^3$ de gaz;

(d) le contre collage ou le transfert de la couche adhésive réticulée sur une couche support ou sur un film protecteur anti-adhérent, ladite couche support ou film anti-adhérent pouvant être le revers de la surface porteuse.

Par « surface porteuse » au sens de la présente invention, il faut comprendre soit un convoyeur à bande recouvert d'une couche anti-adhérente, soit un film protecteur anti-adhérent (« release liner » en anglais), soit une couche support. Ainsi, la surface porteuse est amenée à devenir partie intégrante de l'article auto-adhésif, soit comme film protecteur anti-adhérent, soit comme couche support.

Dans le cas où la surface porteuse n'est pas une couche support, le procédé d'obtention de l'article auto-adhésif selon l'invention comprend l'étape (d) de transfert de la couche adhésive réticulée sur une couche support.

Dans le cas où la surface porteuse est une couche support, le procédé d'obtention de l'article auto-adhésif selon l'invention peut comprendre l'étape (d) de contre collage de la couche adhésive sur un film protecteur anti-adhérent.

Selon une variante préférée de l'invention, l'étape (d) du procédé sus-décrit consiste en un transfert de la couche adhésive réticulée sur une couche support souple (pouvant être un film plastique) après refroidissement de la couche adhésive réticulée à une température inférieure à la température de dégradation ou de ramollissement du matériau composant la couche support.

Selon un mode de réalisation, l'article auto-adhésif selon l'invention est susceptible d'être obtenu par le procédé tel que décrit précédemment, ne comprenant pas d'étape de prétraitement de la surface de la couche support. Ces prétraitements visent à modifier chimiquement et/ou physiquement ladite surface, pour accroitre l'énergie superficielle et/ou la rugosité de ladite surface, et ainsi améliorer l'adhérence de la couche adhésive sur ladite surface. A titre d'exemple, de traitements de surface connus, on peut citer un traitement plasma, corona, une abrasion ou encore l'application sur ladite surface d'un agent chimique d'accroche (dit aussi primaire) capable de conférer au substrat revêtu dudit agent une énergie de surface élevée.

Selon un mode de réalisation, le procédé de fabrication de l'article auto-adhésif selon l'invention comprend en outre une étape (e) d'enduction d'une seconde couche de composition adhésive selon l'invention sur la couche support suivie d'une étape (f) de réticulation de la composition adhésive enduite à l'étape (e) par chauffage à une température allant de 20 à 200°C. Selon ce mode de réalisation, un article auto-adhésif double face est obtenu.

L'étape (b) d'enduction peut être réalisée au moyen de dispositifs d'enduction connus, comme par exemple une buse à lèvre ou de type rideau, ou encore au rouleau. Elle met en oeuvre un grammage de composition adhésive allant de 3 à 2000 g/$m^2$, de préférence de 5 à 1000 g/$m^2$, de préférence encore de 10 à 500 g/$m^2$ ou plus préférentiellement de 12 à 250g/$m^2$.

Le grammage de composition adhésive nécessaire pour la fabrication d'étiquettes auto-adhésives peut aller de 10 à 100 g/$m^2$, de préférence de 20 à 50 g/$m^2$. Celui nécessaire pour la fabrication de rubans auto-adhésifs peut varier dans un domaine beaucoup plus large allant de 3 à 500 g/$m^2$, de préférence de 15 à 250 g/$m^2$ par face.

Selon un mode de réalisation, la composition adhésive enduite est en outre soumise, lors de l'étape (c) à un traitement dans une atmosphère humide caractérisée par son niveau d'humidité. De préférence, l'atmosphère humide est une atmosphère dans laquelle de 2 à 100% des molécules sont des molécules d'eau, de préférence de 4 à 50%, de préférence encore de 5 à 10% des molécules sont des molécules d'eau.

Le taux d'humidité est exprimé en pourcentage d'eau par unité de volume, ce qui correspond au nombre de molécules d'eau divisé par le nombre total de molécules dans une unité de volume. Grâce à la nature linéaire de cette échelle, le taux d'humidité est facilement mesuré et contrôlé en utilisant par exemple des moniteurs de type P.I.D (« Proportional-Integral-Derivative »). Le pourcentage en poids peut être calculé en multipliant le pourcentage du nombre de molécules d'eau par rapport au nombre total de molécules par un facteur de 0,622. Des informations générales sur le taux d'humidité dans divers environnements sont décrites par W. Wagner et al., dans "International Steam Tables - Properties of Water and Steam based on the Industrial Formulation IAPWS-IF97".

Le temps nécessaire à la réticulation de l'étape (c) peut varier dans de larges limites, par exemple entre 1 seconde et 30 minutes, en fonction du grammage de composition adhésive déposé sur la surface porteuse, de la température de chauffage, et de l'humidité.

Cette étape de réticulation thermique a pour effet la création - entre les chaînes polymériques à terminaisons aloxysilanes hydrolysables de la composition (A) et sous l'action de l'humidité atmosphérique - des liaisons de type siloxane qui conduisent à la formation d'un réseau polymérique tri-dimensionnel. La composition adhésive ainsi réticulée est en particulier un adhésif sensible à la pression qui confère à la couche support qui en est revêtue le pouvoir adhésif

et le tack désirables.

De préférence, l'enduction est réalisée uniformément sur la couche support ou sur la couche protectrice anti-adhérente mais l'enduction peut également être adaptée à la forme souhaitée de l'article auto-adhésif final.

Selon un mode de réalisation, l'enduction par la composition adhésive est réalisée sur au moins une partie des deux faces de la couche support. Si les deux faces de la couche support sont enduites, la composition adhésive peut être identique ou différente sur les deux faces, et le grammage peut être identique ou différent sur les deux faces.

Selon un mode de réalisation de l'invention, l'article auto-adhésif comprend une couche adhésive sur au moins une partie d'une face ou sur au moins une partie des deux faces de la couche support, ladite ou lesdites couches adhésives étant éventuellement revêtues d'une couche protectrice anti-adhérente. Selon un mode de réalisation, l'article auto-adhésif comprend deux couches protectrices anti-adhérentes sur chacune des deux couches adhésives. Dans ce cas, les deux couches protectrices peuvent être en matériaux identiques ou différents et/ou elles peuvent avoir une épaisseur identique ou différente.

L'article auto-adhésif selon l'invention peut être utilisé dans une méthode de collage comprenant les étapes suivantes :

a) retirer la couche protectrice anti-adhérente, lorsqu'une telle couche est présente ;

b) appliquer l'article auto-adhésif sur une surface d'un produit; et

c) appliquer une pression sur ledit article.

A l'étape b), l'article auto-adhésif est appliqué de manière à ce que la partie auto-adhésive de l'article (formée par la couche auto-adhésive) fasse face à la surface du produit.

Selon un mode de réalisation dans lequel l'article auto-adhésif est un article double face, la méthode de collage comprend en outre une étape dans laquelle soit une seconde surface d'un produit est appliquée sur l'article collé sur la première surface d'un produit, soit l'article collé sur la première surface d'un produit est appliqué sur une seconde surface d'un produit.

Tous les modes de réalisation décrits ci-dessus peuvent être combinés les uns avec les autres. En particulier, les différents constituants susmentionnés de la composition adhésive, et notamment les modes préférés, de la composition peuvent être combinés les uns avec les autres.

Dans le cadre de l'invention, par « comprise entre x et y », ou « allant de x à y », on entend un intervalle dans lequel les bornes x et y sont incluses. Par exemple, la gamme «comprise entre 0% et 25% » inclus notamment les valeurs 0% et 25%.

Les exemples suivants sont donnés à titre purement illustratif de l'invention et ne sauraient être interprétés pour en limiter la portée.

EXEMPLES

Les ingrédients suivants ont été utilisés dans les exemples :

KURARAY P6010 : commercialisé par la société KURARAY, correspondant à un polyester diol de formule (III) ayant un $I_{OH}$ d'environ 19 mg KOH/g (obtenu à partir d'acide adipique et de 3-méthyl-1,5-pentanediol);
KURARAY P10010 : commercialisé par la société KURARAY, correspond à un polyester diol de formule (III) et ayant un ion d'environ 11 mg KOH/g (obtenu à partir d'acide adipique et de 3-méthyl-1,5-pentanediol);
DYNACOLL® 7250 : commercialisé par la société EVONIK, correspondant à un polyester diol de formule (III) ayant un $I_{OH}$ compris entre 18 et 24 mg KOH/g (obtenu notamment à partir d'acide adipique et de 1,6 hexanediol);
SILQUEST® A-LINK 35: commercialisé par la société MOMENTIVE, correspondant à un isocyanatosilane de formule (VII) susmentionnée dans laquelle p est égal à 0, $R^5$ est un méthyle, et $R^3$ est un propylène ;
BORCHI KAT ® VP 0244 : disponible commercialement chez la société BORCHERS, catalyseur de type neodécanoate de bismuth et de zinc ;
DERTOPHENE ® H150 : disponible auprès de DRT, correspondant à une résine tackifiante de type terpène phénolique ;
IRGANOX ® 1010 : disponible auprès de BASF, correspondant à un antioxydant de type phénol encombré ;
IRGAFOS ® 168 : disponible auprès de BASF, correspondant à un antioxydant de type phosphite;
IRGANOS ® 245 : disponible chez BASF est un antioxydant phénolique encombré du type éthylènebis(oxyéthylène)bis[3-(5-tert-butyl-4-hydroxy-m-tolyl)propionate]
K-KAT ® 5218 : disponible auprès de la société KING INDUSTRIES, correspondant à un catalyseur de type chélate d'aluminium.

REAGEM 5110 : disponible chez DRT est une résine tackifiante de type polyester polyol ayant un indice d'hydroxyle de 65 mg KOH/g.

Les exemples A, B et C illustrent la préparation de composition (A) comprenant au moins un polyuréthane de formule (I) dans laquelle $R^3$ est le radical propylène, et $R^5$ est le radical méthyle.

**Exemple A :** préparation d'une composition ($A_1$)

Dans un réacteur verre sont introduits :

- 747,8 g (0,1259 mol) du polyester polyol KURARAY P6010 (poly[(3 méthyl-1,5 pentanediol)-ali-(adipic acid)])
- 52 g (0,253 mol) de SILQUEST® A-LINK 35 (gamma-isocyanato-n-propyl-triméthoxysilane), correspondant à un ratio de NCO/OH (groupe fonctionnels) égal à 1 ; et
- 250 ppm d'un catalyseur de type néodécanoate de bismuth et de zinc (BORCHI KAT VP 0244).

Le mélange a été agité constamment à une température de 85°C et sous azote jusqu'à réaction complète des fonctions NCO de l'isocyanatosilane SILQUEST® A-LINK 35. La disparition de la fonction NCO est observée en utilisant la technique Infra-rouge par transformation de fourrier. Le pic correspondant à la fonction NCO (entre 2260 - 2270$cm^{-1}$) n'étant plus présent sur le spectre infra-rouge quand tout à réagit.

On obtient environ 800 grammes d'une composition ayant une viscosité de 142Pa.s à 23°C (mesurée au viscosimètre Brookfield avec une aiguille tournant à raison de 20 tr/min).

**Exemple B** : préparation d'une composition ($A_2$)

Dans un réacteur verre sont introduits :

- 777,08 g (0,1412 mol) du polyester polyol DYNACOLL 7250 ;
- 62,66 g (0,305 mol) de SILQUEST® A-LINK 35 (gamma-isocyanato-n-propyl-triméthoxysilane), correspondant à un ratio de NCO/OH (groupe fonctionnels) égal à 1 ; et
- 250 ppm d'un catalyseur d'un catalyseur de type néodécanoate de bismuth et de zinc (BORCHI KAT VP 0244).

Le mélange a été agité constamment à une température de 85°C et sous azote jusqu'à réaction complète des fonctions NCO de l'isocyanatosilane SILQUEST® A-LINK 35. La disparition de la fonction NCO (entre 2260 - 2270$cm^{-1}$) est observée en utilisant la technique Infra-rouge par transformation de fourrier. Le pic correspondant à la fonction NCO n'étant plus présent sur le spectre infra-rouge quand tout à réagit.

On obtient environ 840 grammes d'une composition ayant une viscosité de 101 Pa.s à 23°C (mesurée au viscosimètre Brookfield avec une aiguille tournant à raison de 20 tr/min).

**Exemple C** : préparation d'une composition ($A_3$)

Dans un réacteur verre sont introduits :

- 750 g (0.0749 mol du polyester polyol KURARAY P10010 (poly[(3 méthyl-1,5 pentanediol)-ali-(adipic acid)]),
- 32,63 g (0.159 mol) de SILQUEST® A-LINK 35 (gamma-isocyanato-n-propyl-triméthoxysilane), correspondant à un ratio de NCO/OH (groupe fonctionnels) égal à 1 ; et
- 250 ppm d'un catalyseur d'un catalyseur de type néodécanoate de bismuth et de zinc (BORCHI KAT VP 0244).

Le mélange a été agité constamment à une température de 85°C et sous azote jusqu'à réaction complète des fonctions NCO de l'isocyanatosilane SILQUEST® A-LINK 35. La disparition de la fonction NCO est observée en utilisant la technique Infra-rouge par transformation de fourrier. Le pic correspondant à la fonction NCO (entre 2260 - 2270$cm^{-1}$) n'étant plus présent sur le spectre infra-rouge quand tout à réagit.

Les exemples 1 à 3 illustrent la préparation des compositions adhésives réticulables à chaud, à partir des compositions ($A_1$), ($A_2$) et ($A_3$).

**Exemple 1** :

1A : Préparation d'une composition adhésive C1 réticulable par chauffage à base de composition ($A_1$)

La composition C1 figurant dans le tableau 1 suivant est préparée en introduisant tout d'abord la résine tackifiante avec les antioxydants dans un réacteur en verre sous vide et chauffé à environ 160°C. Puis, une fois la résine fondue, la composition ($A_1$) est ajoutée par étapes de manière à obtenir après chaque ajout un mélange substantiellement homogène. Une fois l'ajout de la composition ($A_1$) terminée, le mélange est agité sous vide durant 15 minutes, puis refroidi à 80°C. Le catalyseur est alors introduit. Le mélange est maintenu sous vide et sous agitation durant 10 minutes supplémentaires.

Tableau 1 : Composition C1

| | |
|---|---|
| Composition ($A_1$) | 51,5 |
| Dertophène H150 | 45,5 |
| K-KAT® 5218 | 2 |
| Irganox® 1010 | 0,7 |
| Irgafos® 168 | 0,3 |
| Viscosité Brookfield à 100°C (Pa.s) | 3,3 |
| Temps d'apparition de peau (seconde) | 250 |
| *Les quantités exprimées sont des pourcentages en poids par rapport au poids total de la composition C1.* | |

1B : Préparation d'une couche support PET revêtue de la composition réticulée, à raison d'un grammage de 50 g/$m^2$

On utilise comme couche support une feuille rectangulaire de PolyEthylèneTéréphtalate (PET) d'épaisseur 50 μm et de dimensions 20 cm sur 40 cm.

On préchauffe la composition obtenue en 1A à une température proche de 100°C et on l'introduit dans une cartouche d'où l'on extrude un cordon qui est déposé près du bord de la feuille parallèlement à sa largeur.

La composition renfermée dans ce cordon est ensuite répartie sur la totalité de la surface de la feuille, de manière à obtenir une couche uniforme et d'épaisseur sensiblement constante. On utilise pour cela un tire-film (également dénommé filmographe) qui est déplacé du bord de la feuille au bord opposé. On dépose ainsi une couche de composition correspondant à un grammage de 50 g/$m^2$, ce qui représente environ une épaisseur de l'ordre de 50 μm.

La feuille de PET ainsi revêtue est alors placée dans une étuve à 120°C à humidité contrôlée durant 8 à 10 minutes pour la réticulation de la composition, puis contrecollée sur une couche anti-adhérente protectrice consistant en une feuille de film siliconé, rectangulaire et de mêmes dimensions.

La couche support PET ainsi obtenue est soumise aux tests décrits ci-après à l'exemple 5.

**Exemple 2 :**

2A : Préparation d'une composition adhésive C2 réticulable par chauffage à base de composition ($A_2$)

La composition C2 figurant dans le tableau 2 suivant est préparée introduisant tout d'abord la résine tackifiante avec les antioxydants dans un réacteur en verre sous vide et chauffé à environ 150°C. Puis, une fois la résine fondue, la composition ($A_2$) est ajoutée par étapes de manière à obtenir après chaque ajout un mélange substantiellement homogène. Une fois l'ajout de la composition ($A_1$) terminée, le mélange est agité sous vide durant 15 minutes, puis refroidi à 80°C. Le catalyseur est alors introduit. Le mélange est maintenu sous vide et sous agitation durant 10 minutes supplémentaires.

Tableau 2 : Composition C2

| | |
|---|---|
| Composition ($A_2$) | 51,5 |
| Dertophène H150 | 45,5 |
| K-KAT® 5218 | 2 |

(suite)

| | |
|---|---|
| Irganox® 1010 | 0,7 |
| Irgafos® 168 | 0,3 |
| Viscosité Brookfield à 100°C (Pa.s) | 14,3 |
| Temps d'apparition de peau (seconde) | 130 |
| *Les quantités exprimées sont des pourcentages en poids par rapport au poids total de la composition C2.* | |

2B : Préparation d'une couche support PET revêtue de la composition réticulée, à raison d'un grammage de 50 g/$m^2$

On utilise comme couche support une feuille rectangulaire de PolyEthylèneTéréphtalate (PET) d'épaisseur 50 $\mu$m et de dimensions 20 cm sur 40 cm.

On préchauffe la composition obtenue en 2A à une température proche de 100°C et on l'introduit dans une cartouche d'où l'on extrude un cordon qui est déposé près du bord de la feuille parallèlement à sa largeur.

La composition renfermée dans ce cordon est ensuite répartie sur la totalité de la surface de la feuille, de manière à obtenir une couche uniforme et d'épaisseur sensiblement constante. On utilise pour cela un tire-film (également dénommé filmographe) qui est déplacé du bord de la feuille au bord opposé. On dépose ainsi une couche de composition correspondant à un grammage de 50 g/$m^2$, ce qui représente environ une épaisseur de l'ordre de 50 $\mu$m.

La feuille de PET ainsi revêtue est alors placée dans une étuve à 120°C à humidité contrôlée durant 8 à 10 pour la réticulation de la composition, puis contrecollée sur une couche anti-adhérente protectrice consistant en une feuille de film siliconé, rectangulaire et de mêmes dimensions.

La couche support PET ainsi obtenue est soumise aux tests décrits ci-après à l'exemple 5.

**Exemple 3** :

3A : Préparation d'une composition adhésive C3 réticulable par chauffage à base de composition ($A_3$)

La composition C3 figurant dans le tableau 3 suivant est préparée introduisant tout d'abord la résine tackifiante avec les antioxydants dans un réacteur en verre sous vide et chauffé à environ 150°C. Puis, une fois la résine fondue, la composition ($A_3$) est ajoutée par étapes de manière à obtenir après chaque ajout un mélange substantiellement homogène. Une fois l'ajout de la composition ($A_1$) terminée, le mélange est agité sous vide durant 15 minutes, puis refroidi à 80°C. Le catalyseur est alors introduit. Le mélange est maintenu sous vide et sous agitation durant 10 minutes supplémentaires.

Tableau 3 : Composition C3

| | |
|---|---|
| Composition ($A_2$) | 51,5 |
| Dertophène H150 | 45,5 |
| K-KAT® 5218 | 2 |
| Irganox® 1010 | 0,7 |
| Irgafos® 168 | 0,3 |
| Viscosité Brookfield à 100°C (Pa.s) | 67 |
| Temps d'apparition de peau (seconde) | 80 |
| *Les quantités exprimées sont des pourcentages en poids par rapport au poids total de la composition C3.* | |

3B : Préparation d'une couche support PET revêtue de la composition réticulée, à raison d'un grammage de 50 g/$m^2$

On utilise comme couche support une feuille rectangulaire de PolyEthylèneTéréphtalate (PET) d'épaisseur 50 $\mu$m et de dimensions 20 cm sur 40 cm.

On préchauffe la composition obtenue en 3A à une température proche de 100°C et on l'introduit dans une cartouche d'où l'on extrude un cordon qui est déposé près du bord de la feuille parallèlement à sa largeur.

La composition renfermée dans ce cordon est ensuite répartie sur la totalité de la surface de la feuille, de

manière à obtenir une couche uniforme et d'épaisseur sensiblement constante. On utilise pour cela un tire-film (également dénommé filmographe) qui est déplacé du bord de la feuille au bord opposé. On dépose ainsi une couche de composition correspondant à un grammage de 50 g/m$^2$, ce qui représente environ une épaisseur de l'ordre de 50 $\mu$m.

La feuille de PET ainsi revêtue est alors placée dans une étuve à 120°C à humidité contrôlée durant 8 à 10 pour la réticulation de la composition, puis contrecollée sur une couche anti-adhérente protectrice consistant en une feuille de film siliconé, rectangulaire et de mêmes dimensions.

La couche support PET ainsi obtenue est soumise aux tests décrits ci-après à l'exemple 5.

**Exemple 4 :**

4A : Préparation d'une composition adhésive C4 réticulable par chauffage à base de composition ($A_1$)

La composition C4 figurant dans le tableau 4 suivant est préparée en introduisant tout d'abord la résine tackifiante avec les antioxydants dans un réacteur en verre sous vide et chauffé à environ 160°C. Puis, une fois la résine fondue, la composition ($A_1$) est ajoutée par étapes de manière à obtenir après chaque ajout un mélange substantiellement homogène. Une fois l'ajout de la composition ($A_1$) terminée, le mélange est agité sous vide durant 15 minutes, puis refroidi à 80°C. Le catalyseur est alors introduit. Le mélange est maintenu sous vide et sous agitation durant 10 minutes supplémentaires.

Tableau 4 : Composition C4

| | |
|---|---|
| Composition ($A_1$) | 51 |
| Reagem 5110 | 46 |
| K-KAT® 5218 | 2 |
| Irganox® 1010 | 0,75 |
| Irgafos® 245 | 0,25 |
| Viscosité Brookfield à 100°C (Pa.s) | 9000 |
| *Les quantités exprimées sont des pourcentages en poids par rapport au poids total de la composition C4* | |

4B : Préparation d'une couche support PET revêtue de la composition réticulée, à raison d'un grammage de 50 g/m$^2$

On utilise comme couche support une feuille rectangulaire de PolyEthylèneTéréphtalate (PET) d'épaisseur 50 $\mu$m et de dimensions 20 cm sur 40 cm.

On préchauffe la composition obtenue en 4A à une température proche de 100°C et on l'introduit dans une cartouche d'où l'on extrude un cordon qui est déposé près du bord de la feuille parallèlement à sa largeur.

La composition renfermée dans ce cordon est ensuite répartie sur la totalité de la surface de la feuille, de manière à obtenir une couche uniforme et d'épaisseur sensiblement constante. On utilise pour cela un tire-film (également dénommé filmographe) qui est déplacé du bord de la feuille au bord opposé. On dépose ainsi une couche de composition correspondant à un grammage de 50 g/m$^2$, ce qui représente environ une épaisseur de l'ordre de 50 $\mu$m.

La feuille de PET ainsi revêtue est alors placée dans une étuve à 120°C à humidité contrôlée durant 8 à 10 minutes pour la réticulation de la composition, puis contrecollée sur une couche anti-adhérente protectrice consistant en une feuille de film siliconé, rectangulaire et de mêmes dimensions.

La couche support PET ainsi obtenue est soumise aux tests décrits ci-après à l'exemple 5.

**Exemple 5 : Tests**

*Test de pelage à 180° sur plaque d'acier inoxydable* :

Le pouvoir adhésif est évalué par le test de pelage (ou peel) à 180° sur plaque d'acier inoxydable tel que décrit dans la méthode FINAT n° 1, publiée dans le Manuel Technique FINAT 6ème édition, 2001. FINAT est la fédération internationale des fabricants et transformateurs d'étiquettes auto-adhésives. Le principe de ce test est le suivant.

Une éprouvette sous forme de bande rectangulaire (25 mm $\times$ 175 mm) est découpée dans la couche support PET revêtu de la composition réticulée obtenue à l'exemple 1 (2, 3 ou 4 respectivement). Cette éprouvette est fixée sur les 2/3 de sa longueur (après enlèvement de la portion de couche anti-adhérente protectrice correspondante), sur un substrat constitué d'une plaque d'acier inoxydable. L'assemblage obtenu mis en vieillissement pendant 24h à la température souhaitée. Le pelage est réalisé après un refroidissement d'une heure à 23°C et 50% d'humidité relative. A cet effet l'assemblage alors placé dans un appareil de traction capable, à partir de l'extrémité restée libre de la bande rectangulaire, d'effectuer le pelage ou décollement de la bande sous un angle de 180° et avec une vitesse de séparation de 300 mm par minute. L'appareil mesure la force requise pour décoller la bande dans ces conditions.

Les résultats sont exprimés en N/cm et indiqué dans le tableau suivant pour différentes températures de vieillissement :

| | Composition C1 | Composition C2 | Composition C3 | Composition C4 |
|---|---|---|---|---|
| Température de vieillissement (°C) | | | | |
| 23°C | 10,8 | 14 | 8,8 | 8,7 |
| 90°C | 12,8 | 22 | 9,2 | n.d. |
| 120°C | 12,8 | 22 | 8,8 | n.d. |
| 140°C | 14,4 | 22 | 8,4 | 11,6 |
| 160°C | 16 | Rupture support PET | 14,4 | n.d. |
| 180°C | Rupture support PET | Rupture support PET | Rupture support PET | n.d. |
| n.d. : non déterminé | | | | |

Il ressort de ce tableau que les compositions C1, C2, C3 et C4 selon l'invention fournissent avantageusement une force de pelage élevée (pour décoller la bande), sur une large gamme de température, et notamment pour des températures supérieures ou égales à 120°C, voire supérieures ou égales à 140°C. Ces résultats traduisent que le joint adhésif résiste avantageusement jusqu'à de hautes températures. Nous observons après des vieillissements à très hautes températures : 160°C et 180°C des ruptures de support PET qui montrent que la cohésion et l'adhésion du film adhésif sont supérieures à la cohésion du support PET 50μm. Cette observation met en évidence une excellente résistance aux très hautes températures des compositions autoadhésives réticulables à chaud selon l'invention.

*Test 4h « heavv weight shear »*

La cohésion interne de l'adhésif est évaluée par le test de cisaillement à température ambiante sous contrainte constante pendant une durée de 4 heures. La préparation des plaques de test est décrite dans la méthode PSTC 107, publiée dans le Manuel Technique PSTC (15ième édition) de la fédération internationale des fabricants de rubans adhésifs (Pressure Sensitive Tape Council).

Le principe de ce test est le suivant :

Une éprouvette sous forme de bande rectangulaire (25 mm × 125 mm) est découpée dans la couche support PET revêtue de la composition adhésive réticulée constituant l'article auto-adhésif obtenu précédemment. Cette éprouvette est ensuite stockée durant 24 heures à 23°C et 50 % d'humidité relative puis fixée (après enlèvement de la portion de couche anti-adhérente protectrice correspondante) sur une plaque Inox préalablement préparée comme décrit dans la méthode PSTC 107. La surface de collage est de 25 × 25mm soient 625 mm$^2$. La partie restante de la couche anti adhérente est ensuite enlevée de manière à pouvoir installer le système de fixation des poids sur la partie libre de l'éprouvette qui dépasse de la plaque. Le sytème de fixation des poids est constitué d'un crochet positionné à 5 cm de la surface de collage éprouvette / inox lequel est maintenu en recollant l'éprouvette sur elle-même et renforcé de manière à pouvoir supporter les poids allant jusqu'à 8 kgs ou 80 N et ce, sans se rompre pendant toute la durée du test.

L'assemblage obtenu est laissé au minimum 60 minutes à température ambiante (23°C) puis placé sur un banc de tests en cisaillement statique tel que décrit dans la méthode PSTC 107 (procédure A) : la plaque inox est fixée verticalement avec un angle de 2°, un poids unique et constant est fixé sur le crochet de l'éprouvette et on lance le test pour une durée de 4h. Au bout de ces 4 heures si l'éprouvette ne s'est pas déplacée de plus de 2 mm (fluage), le poids est augmenté de 1 kg sur une nouvelle éprouvette préparée avec la même méthodologie. Si l'éprouvette s'est déplacée de plus de 2 mm après une période de 4 h, la valeur notée est celle du poids inférieur pour lequel l'éprouvette ne s'est pas déplacée.

Les résultats sont exprimés en kgs et indiqués dans le tableau suivant pour différentes températures de vieillissement :

| | Composition C1 | Composition C2 | Composition C3 |
|---|---|---|---|
| Température de vieillissement (°C) | (kg) | (kg) | (kg) |
| 23°C | 8 | 8 | 8 |
| 90°C | 8 | 8 | 8 |
| 120°C | 8 | 8 | 8 |
| 140°C | 8 | 8 | 8 |
| 160°C | 8 | 8 | 8 |
| 180°C | 6 | 8 | 8 |

Il ressort de ce tableau que les compositions C1, C2 et C3 selon l'invention fournissent avantageusement des résistances aux cisaillements élevées, sur une large gamme de température, et notamment pour des températures supérieures ou égales à 120°C, voire supérieures ou égales à 140°C ou encore 160°C. Ces résultats traduisent que le joint adhésif résiste avantageusement jusqu'à de hautes températures et sous des contraintes supérieures ou égales à 6kgs à 180°C.

## Revendications

**1.** Composition adhésive réticulable par chauffage comprenant :

- de 20% à 84 % en poids d'une composition (A) comprenant :

  • de 75% à 100% en poids d'au moins un polyuréthane comprenant 2 groupes terminaux de type alkoxysilane hydrolysables et ayant la formule (I) suivante :

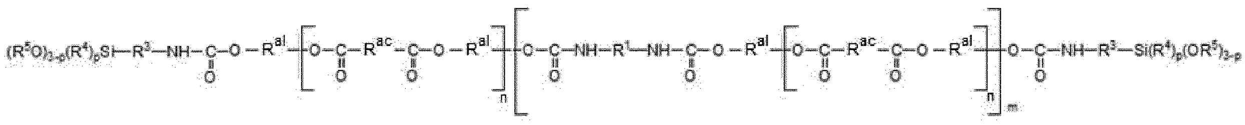

(I)

dans laquelle :

- $R^1$ représente un radical divalent hydrocarboné comprenant de 5 à 15 atomes de carbone qui peut être aromatique ou aliphatique, linéaire, ramifié ou cyclique ;
- $R^{al}$ représente un radical hydrocarboné divalent issu d'un diol saturé, par remplacement de chacun des deux groupes hydroxyles par une valence libre, ledit diol ayant un indice d'hydroxyle $I_{OH}$ supérieur à 220 mg KOH/g ;
- $R^{ac}$ représente un radical hydrocarboné divalent issu d'un acide dicarboxylique saturé, par remplacement de chacun des deux groupes carboxyles -COOH par une valence libre, ledit acide ayant un indice d'acide $I_A$ supérieur à 200 mg KOH/g ;
- n est un nombre tel que le polyester diol de formule (III) :

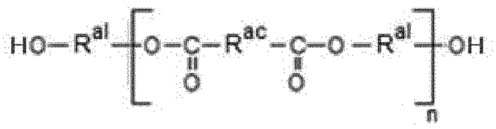

(III)

a un indice d'hydroxyle $I_{OH}$ compris entre 4 et 24 mg KOH/g, de préférence entre 9 et 24 mg KOH/g ;

- $R^3$ représente un radical divalent alkylène linéaire comprenant de 1 à 3 atomes de carbone ;
- $R^4$ et $R^5$, identiques ou différents, représentent chacun un radical alkyle linéaire ou ramifié de 1

à 4 atomes de carbone, avec la possibilité lorsqu'il y a plusieurs radicaux $R^4$ (ou $R^5$) que ceux-ci soient identiques ou différents ;
- m est un nombre entier tel que la masse molaire moyenne en nombre du polymère de formule (I) est comprise entre 400 g/mol et 50 000 g/mol;
- p est un nombre entier égal à 0, 1 ou 2 ;

• de 0% à 25% en poids d'au moins un polyuréthane comprenant 1 groupe terminal de type alkoxysilane hydrolysable et ayant la formule (II) suivante

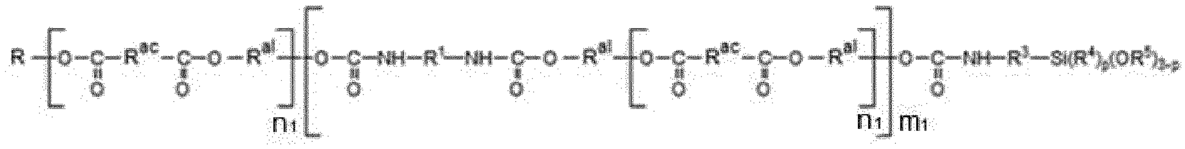

(II)

dans laquelle :

- $n_1$ et $m_1$ sont chacun des nombres entiers tels que la masse molaire moyenne en nombre du polyuréthane de formule (II) est comprise entre 400 g/mol et 50 000 g/mol ;
- $R^{ac}$ et $R^{al}$ sont tels que définis précédemment ; et
- R représente un radical hydrocarboné monovalent issu d'un monol, par remplacement du groupe hydroxyle par une valence libre,

ladite composition (A) étant obtenue par un procédé qui comprend une étape de préparation d'une composition (A-1) comprenant un polyester diol amorphe de formule (III) susmentionnée ou un mélange de polyesters diols amorphes de formule (III) susmentionnée, en faisant réagir par une réaction de polycondensation :

- (i) une composition (A-1-1) comprenant au moins un acide dicarboxylique saturé, ladite composition (A-1-1) ayant un indice d'acide $I_A$ supérieur à 200 mg KOH/g, de préférence supérieur ou égal à 300 mg KOH/g, préférentiellement supérieur ou égal à 500 mg KOH/g, en particulier supérieur ou égal à 700 mg KOH/g, et avantageusement supérieur ou égal à 800 mg KOH/g ; et
- (ii) une composition (A-1-2) comprenant au moins un diol saturé, ladite composition (A-1-2) ayant un indice d'hydroxyle $I_{OH}$ supérieur à 220 mg KOH/g , de préférence supérieur ou égal à 500 mg KOH/g, préférentiellement supérieur ou égal à 700 mg KOH/g, encore plus préférentiellement supérieur ou égal à 900 mg KOH/g ; et
- (iii) éventuellement une composition (A-1-3) comprenant au moins un monol,

à condition qu'au moins un acide dicarboxylique saturé de la composition (A-1-1) ou au moins un diol saturé de la composition (A-1-2) soit ramifié,

la composition (A-1) ayant un indice hydroxyle $I_{OH}$ compris entre 4 et 24 mg KOH/g, de préférence entre 7 et 24 mg KOH/g, préférentiellement entre 9 et 24 mg KOH/g ;

- de 15 à 79 % en poids d'une résine tackifiante compatible (B), de préférence de masse molaire moyenne en nombre comprise entre 200 g/mol et 50 000 g/mol, et préférentiellement choisie parmi les résines suivantes:

- (i) susceptibles d'être obtenues par polymérisation d'hydrocarbures terpéniques et de phénols, en présence de catalyseur(s) de Friedel-Crafts,
- (ii) susceptibles d'être obtenues par polymérisation d'alpha-méthyl styrène, et éventuellement par réaction avec des phénols ;
- (iii) les colophanes d'origine naturelle ou modifiées (telles que par exemple la colophane extraite de la gomme de pins, la colophane de bois extraite des racines de l'arbre) et leurs dérivés hydrogénés, dimérisés, polymérisés ou estérifiés par des monoalcools ou des polyols (comme par exemple le glycérol ou le pentaérythritol) ;
- (iv) les résines acryliques ayant en particulier une viscosité à 100°C inférieure à 100 Pa.s mesurée selon la méthode décrite dans la description; et

- (v) leurs mélanges

- de 0,01% à 5%, de préférence de 0,01% à 3% en poids d'un catalyseur de réticulation (C).

**2.** Composition selon la revendication 1, **caractérisée en ce que** l'acide dicarboxylique saturé de la composition (A-1-1) a un indice d'acide $I_A$ supérieur ou égal à 300 mg KOH/g, de préférence supérieur ou égal à 400 mg KOH/g, préférentiellement supérieur ou égal à 500 mg KOH/g, en particulier supérieur ou égal à 700 mg KOH/g, et avantageusement supérieur ou égal à 800 mg KOH/g.

**3.** Composition selon l'une quelconque des revendications 1 ou 2, **caractérisée en ce que** le diol saturé de la composition (A-1-2) a un indice d'hydroxyle $I_{OH}$ supérieur ou égal à 500 mg KOH/g, de préférence supérieur ou égal à 700 mg KOH/g, encore plus préférentiellement supérieur ou égal à 900 mg KOH/g.

**4.** Composition selon l'une quelconque des revendications 1 à 3, **caractérisée en ce que** la masse molaire moyenne en nombre du polyuréthane comprenant 2 groupes terminaux de type alkoxysilane hydrolysables de formule (I) est comprise entre 500 g/mol et 50 000 g/mol, de préférence entre 600 g/mol et 30 000 g/mol, préférentiellement entre 4 000 g/mol et 25 000 g/mol, par exemple entre 8 000 g/mol et 25 000 g/mol.

**5.** Composition selon l'une quelconque des revendications 1 à 4, **caractérisée en ce que** le polyester diol amorphe de formule (III) a un indice d'hydroxyle $I_{OH}$ compris entre 7 et 24 mg KOH/g, de préférence entre 7 et 20 mg KOH/g, et en particulier entre 9 et 19 mg KOH/g.

**6.** Composition selon l'une quelconque des revendications 1 à 5, **caractérisée en ce que** le polyester diol amorphe de formule (III) a une viscosité mesurée à 23° inférieure à 10 000 Pa.s, mesurée selon la méthode décrite dans la description, de préférence inférieure à 1 000 Pa.s, préférentiellement inférieure à ou égale à 700 Pa.s, plus préférentiellement inférieure ou égale à 690 Pa.s, encore plus préférentiellement inférieure ou égale à 500 Pa.s, en particulier inférieure ou égale à 250 Pa.s, par exemple inférieure ou égale à 190 Pa.s, notamment inférieure ou égale à 100 Pa.s.

**7.** Composition selon l'une quelconque des revendications 1 à 6, **caractérisée en ce que** le polyester diol amorphe de formule (III) a une température de transition vitreuse $T_g$ inférieure à 0°C, mesurée selon la méthode décrite dans la description, de préférence inférieure ou égale à -20°C, de préférence inférieure ou égale à -40°C, préférentiellement inférieure ou égale à -50°C, en particulier inférieure ou égale à -60°C, par exemple inférieure ou égale à -64°C.

**8.** Composition selon l'une quelconque des revendications 1 à 7, **caractérisée en ce qu'**au moins un diol saturé de la composition (A-1-2) est ramifié, de préférence tous les diols saturés en mélange dans la composition (A-1-2) sont ramifiés.

**9.** Composition selon l'une quelconque des revendications 1 à 8, **caractérisée en ce que** le radical $R^1$ est choisi parmi l'un des radicaux divalents suivants dont les formules ci-dessous font apparaître les 2 valences libres :

- a) le radical divalent dérivé de l'isophorone diisocyanate (IPDI) :

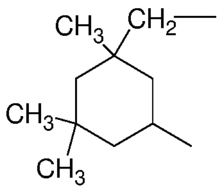

- b)

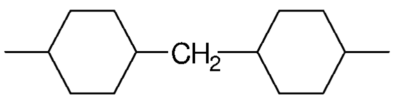

- c) le radical dérivé des 2,4- et 2,6-toluène diisocyanate (TDI) :

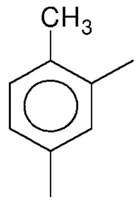

ou

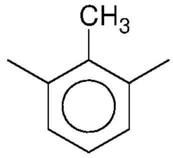

- d) le radical dérivé des 4,4'- et 2,4'-diphénylméthane diisocyanate (MDI) :

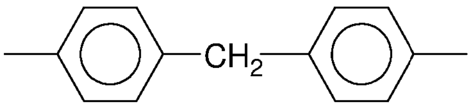

ou

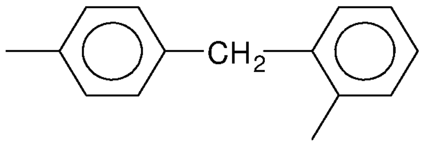

- e) le radical dérivé du m-xylylène diisocyanate (m-XDI) :

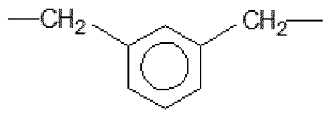

- f) le radical dérivé de l'hexamethylène diisocyanate (HDI) :

$-(CH_2)_6-$

ledit radical $R^1$ étant de préférence le radical divalent dérivé de l'isophorone diisocyanate ou du xylylène diisocyanate.

**10.** Composition selon l'une quelconque des revendications 1 à 9, **caractérisée en ce que** :

- $R^3$ est le radical divalent méthylène ou n-propylène ;
- $R^4$ et $R^5$ représentent chacun le radical méthyle ou éthyle ; et/ou
- p est égal à 0 ou 1.

**11.** Composition selon l'une quelconque des revendications 1 à 10, **caractérisée** en ce la composition (A-1) comprend en outre au moins un polyester monol amorphe de formule (IV) suivante :

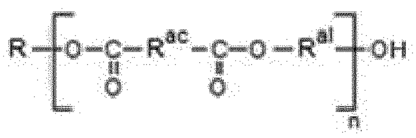

(IV)

**12.** Composition selon l'une quelconque des revendications 1 à 11, **caractérisée en ce qu'**elle comprend :

- (a) de 20% à 75 %, de préférence de 30% à 64%, préférentiellement de 45% à 55% en poids de composition (A), ladite composition (A) comprenant :

  • de 75% à 100%, de préférence de 85% à 100%, préférentiellement de 90% à 100% en poids de polyuréthane comprenant 2 groupes terminaux de type alkoxysilane hydrolysables de formule (I) ; et
  • de 0% à 25% en poids, de préférence de 0% à 15% en poids d'au moins un polyuréthane comprenant 1 groupe terminal de type alkoxysilane hydrolysable de formule (II) ; et

- (b) de 15% à 79%, de préférence de 35% à 69%, préférentiellement de 40% à 60% en poids de résine tackifiante (B),
- (c) de 0,01% à 5%, de préférence de 0,1% à 3%, préférentiellement de 1% à 3% en poids de catalyseur de réticulation (C) ;
- (d) de 0% à 20%, de préférence de 0% à 15%, préférentiellement de 0% à 10% en poids d'au moins un additif choisi dans le groupe constitué des solvants, des pigments, des colorants, des promoteurs d'adhérence, des plastifiants, des stabilisants UV, antioxydants, des paillettes, des matériaux fluorescents, des additifs rhéologiques, des agents anti-dessicants, des charges minérales ou organiques, et de leurs mélanges.

**13.** Composition selon l'une quelconque des revendications 1 à 12, **caractérisée en ce qu'**elle a une viscosité mesurée à 100°C inférieure ou égale à 1 000 Pa.s, mesurée selon la méthode décrite dans la description, de préférence inférieure à 500 Pa.s, préférentiellement inférieure ou égale à 100 Pa.s, plus préférentiellement inférieure ou égale à 50 Pa.s, par exemple inférieure ou égale à 20 Pa.s.

**14.** Utilisation de la composition adhésive selon l'une quelconque des revendications 1 à 13, pour la fabrication d'un article auto-adhésif, tel que par exemple une étiquette et/ou un ruban auto-adhésif à simple ou double face.

**15.** Article auto-adhésif comprenant une couche support revêtue d'une couche auto-adhésive, ladite couche auto-adhésive consistant en une composition adhésive telle que définie selon l'une quelconque des revendications 1 à 13 à l'état réticulé.

## Patentansprüche

**1.** Wärmevernetzbare Klebstoffzusammensetzung, umfassend:

- 20 bis 84 Gew.-% einer Zusammensetzung (A), umfassend:

  • 75 bis 100 Gew.-% mindestens eines Polyurethans mit 2 hydrolysierbaren Endgruppen vom Alkoxysilan-Typ und mit der folgenden Formel (I):

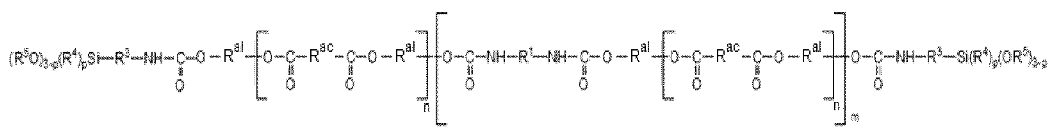

(I)

in der:

- $R^1$ für einen zweiwertigen Kohlenwasserstoffrest mit 5 bis 15 Kohlenstoffatomen steht, der aromatisch oder aliphatisch und linear, verzweigt oder cyclisch sein kann;
- $R^{al}$ für einen zweiwertigen Kohlenwasserstoffrest steht, der sich aus einem gesättigten Diol durch Ersatz jeder der beiden Hydroxylgruppen durch eine freie Valenz ergibt, wobei das Diol eine Hydroxyzahl $I_{OH}$ von mehr als 220 mg KOH/g aufweist;
- $R^{ac}$ für einen zweiwertigen Kohlenwasserstoffrest steht, der sich aus einer gesättigten Dicarbonsäure durch Ersatz jeder der beiden Carboxylgruppen -COOH durch eine freie Valenz ergibt, wobei die Säure eine Säurezahl $I_A$ von mehr als 200 mg KOH/g aufweist;
- n eine solche Zahl ist, dass das Polyesterdiol der Formel (III):

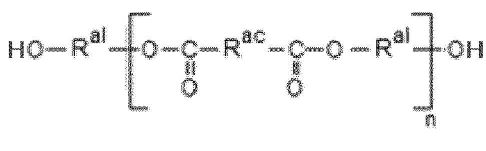

(III)

eine Hydroxylzahl $I_{OH}$ zwischen 4 und 24 mg KOH/g, vorzugsweise zwischen 9 und 24 mg KOH/g,

aufweist;

- $R^3$ für einen linearen zweiwertigen Alkylenrest mit 1 bis 3 Kohlenstoffatomen steht;
- $R^4$ und $R^5$, die gleich oder verschieden sind, jeweils für einen linearen oder verzweigten Alkylrest mit 1 bis 4 Kohlenstoffatomen stehen, wobei dann, wenn mehrere Reste $R^4$ (oder $R^5$) vorliegen, Letztere gleich oder verschieden sein können;
- m eine solche ganze Zahl ist, dass die zahlenmittlere Molmasse des Polymers der Formel (I) zwischen 400 g/mol und 50.000 g/mol liegt;
- p eine ganze Zahl mit einem Wert von 0, 1 oder 2 ist;

• 0 bis 25 Gew.-% mindestens eines Polyurethans mit einer hydrolysierbaren Endgruppe vom Alkoxysilan-Typ und mit der folgenden Formel (II):

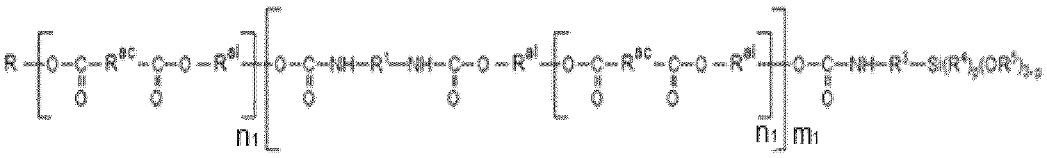

(II)

in der:

- $n_1$ und $m_1$ jeweils für solche ganze Zahlen stehen, dass die zahlenmittlere Molmasse des Polyurethans der Formel (II) zwischen 400 g/mol und 50.000 g/mol liegt;
- $R^{ac}$ und $R^{al}$ wie oben definiert sind; und
- R für einen einwertigen Kohlenwasserstoffrest steht, der sich aus einem Monol durch Ersatz der Hydroxylgruppe durch eine freie Valenz ergibt;

wobei die Zusammensetzung (A) durch ein Verfahren erhalten wird, das einen Schritt der Herstellung einer Zusammensetzung (A-1), die ein amorphes Polyesterdiol der oben angegebenen Formel (III) oder eine Mischung von amorphen Polyesterdiolen der oben angegebenen Formel (III) umfasst, durch Umsetzung von Folgendem in einer Polykondensationsreaktion umfasst:

- (i) einer Zusammensetzung (A-1-1), die mindestens eine gesättigte Dicarbonsäure umfasst, wobei die Zusammensetzung (A-1-1) eine Säurezahl $I_A$ von mehr als 200 mg KOH/g, vorzugsweise größer oder gleich 300 mg KOH/g, bevorzugt größer oder gleich 500 mg KOH/g, insbesondere größer oder gleich 700 mg KOH/g und vorteilhafterweise größer oder gleich 800 mg KOH/g aufweist;
und
- (ii) einer Zusammensetzung (A-1-2), die mindestens ein gesättigtes Diol umfasst, wobei die Zusammensetzung (A-1-2) eine Hydroxylzahl $I_{OH}$ von mehr als 220 mg KOH/g, vorzugsweise größer oder gleich 500 mg KOH/g, bevorzugt größer oder gleich 700 mg KOH/g, noch weiter bevorzugt größer oder gleich 900 mg KOH/g, aufweist;
und
- (iii) gegebenenfalls einer Zusammensetzung (A-1-3), die mindestens ein Monol umfasst;

mit der Maßgabe, dass mindestens eine gesättigte Dicarbonsäure der Zusammensetzung (A-1-1) oder mindestens ein gesättigtes Diol der Zusammensetzung (A-1-2) verzweigt ist;
wobei die Zusammensetzung (A-1) eine Hydroxylzahl $I_{OH}$ zwischen 4 und 24 mg KOH/g, vorzugsweise zwischen 7 und 24 mg KOH/g, bevorzugt zwischen 9 und 24 mg KOH/g, aufweist;

- 15 bis 79 Gew.-% eines kompatiblen Klebrigmacherharzes (B), vorzugsweise mit einer zahlenmittleren Molmasse zwischen 200 g/mol und 50.000 g/mol, und bevorzugt ausgewählt aus den folgenden Harzen:
- (i) Harzen, die durch Polymerisation von Terpen-Kohlenwasserstoffen und Phenolen in Gegenwart von einem oder mehreren Friedel-Crafts-Katalysatoren erhältlich sind;
- (ii) Harzen, die durch Polymerisation von $\alpha$-Methylstyrol und gegebenenfalls durch Umsetzung mit Phenolen erhältlich sind;
- (iii) Kolophoniumharzen natürlicher Herkunft oder modifizierten Kolophoniumharzen (wie beispielsweise dem aus Kiefernharz extrahierten Kolophonium, dem aus Baumwurzeln extrahierten Holzkolophonium)

und deren hydrierten, dimerisierten, polymerisierten oder mit Monoalkoholen oder Polyolen (wie beispielsweise Glycerin oder Pentaerythritol) veresterten Derivaten;
- (iv) Acrylharzen, insbesondere mit einer gemäß der in der Beschreibung angegebenen Methode gemessenen Viskosität bei 100 °C von weniger als 100 Pa.s; und
- (v) Mischungen davon;
- 0,01 bis 5 Gew.-%, vorzugsweise 0,01 bis 3 Gew.-%, eines Vernetzungskatalysators (C).

**2.** Zusammensetzung nach Anspruch 1, **dadurch gekennzeichnet, dass** die gesättigte Dicarbonsäure der Zusammensetzung (A-1-1) eine Säurezahl $I_A$ größer oder gleich 300 mg KOH/g, vorzugsweise größer oder gleich 400 mg KOH/g, bevorzugt größer oder gleich 500 mg KOH/g, insbesondere größer oder gleich 700 mg KOH/g und vorteilhafterweise größer oder gleich 800 mg KOH/g aufweist.

**3.** Zusammensetzung nach Anspruch 1 oder 2, **dadurch gekennzeichnet, dass** das gesättigte Diol der Zusammensetzung (A-1-2) eine Hydroxylzahl $I_{OH}$ größer oder gleich 500 mg KOH/g, vorzugsweise größer oder gleich 700 mg KOH/g, weiter bevorzugt größer oder gleich 900 mg KOH/g, aufweist.

**4.** Zusammensetzung nach einem der Ansprüche 1 bis 3, **dadurch gekennzeichnet, dass** die zahlenmittlere Molmasse des Polyurethans mit zwei hydrolysierbaren Endgruppen vom Alkoxysilan-Typ der Formel (I) zwischen 500 g/mol und 500.00 g/mol, vorzugsweise zwischen 600 g/mol und 30.000 g/mol, bevorzugt zwischen 4000 g/mol und 25.000 g/mol, beispielsweise zwischen 8000 g/mol und 25.000 g/mol, liegt.

**5.** Zusammensetzung nach einem der Ansprüche 1 bis 4, **dadurch gekennzeichnet, dass** das amorphe Polyesterdiol der Formel (III) eine Hydroxylzahl $I_{OH}$ zwischen 7 und 24 mg KOH/g, vorzugsweise zwischen 7 und 20 mg KOH/g und insbesondere zwischen 9 und 19 mg KOH/g aufweist.

**6.** Zusammensetzung nach einem der Ansprüche 1 bis 5, **dadurch gekennzeichnet, dass** das amorphe Polyesterdiol der Formel (III) eine gemäß der in der Beschreibung angegebenen Methode bei 23 °C gemessene Viskosität von weniger als 10.000 Pa.s, vorzugsweise von weniger als 1000 Pa.s, bevorzugt kleiner oder gleich 700 Pa.s, weiter bevorzugt kleiner oder gleich 690 Pa.s, noch weiter bevorzugt kleiner oder gleich 500 Pa.s, insbesondere kleiner oder gleich 250 Pa.s, beispielsweise kleiner oder gleich 190 Pa.s, speziell kleiner oder gleich 100 Pa.s, aufweist.

**7.** Zusammensetzung nach einem der Ansprüche 1 bis 6, **dadurch gekennzeichnet, dass** das amorphe Polyesterdiol der Formel (III) eine gemäß der in der Beschreibung angegebenen Methode gemessenen Glasübergangstemperatur $T_g$ von weniger als 0 °C, vorzugsweise kleiner oder gleich - 20 °C, vorzugsweise kleiner oder gleich -40 °C, bevorzugt kleiner oder gleich -50 °C, insbesondere kleiner oder gleich -60 °C, beispielsweise kleiner oder gleich -64 °C, aufweist.

**8.** Zusammensetzung nach einem der Ansprüche 1 bis 7, **dadurch gekennzeichnet, dass** mindestens ein gesättigtes Diol der Zusammensetzung (A-1-2) verzweigt ist und vorzugsweise alle der gesättigten Diole als Mischung in der Zusammensetzung (A-1-2) verzweigt sind.

**9.** Zusammensetzung nach einem der Ansprüche 1 bis 8, **dadurch gekennzeichnet, dass** der Rest $R^1$ aus einem der folgenden zweiwertigen Reste ausgewählt ist, deren nachstehende Formeln die 2 freien Valenzen zeigen:

- a) dem zweiwertigen Rest, der sich von Isophorondiisocyanat (IPDI) ableitet:

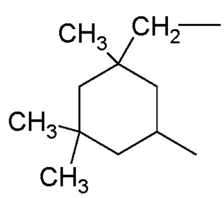

- b)

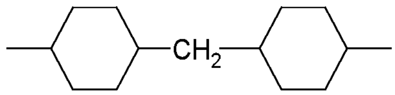

- c) dem Rest, der sich von Toluol-2,4- und -2,6-diisocyanat (TDI) ableitet:

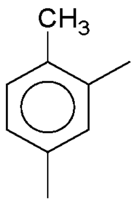

oder

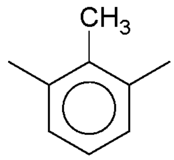

- d) dem Rest, der sich von Diphenylmethan-4,4'- und - 2,4'-diisocyanat (MDI) ableitet:

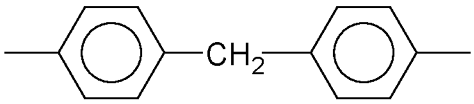

oder

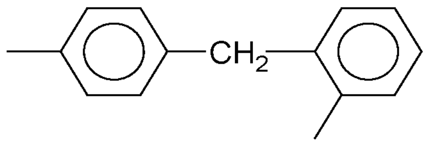

- e) dem Rest, der sich von m-Xylylendiisocyanat (m-XDI) ableitet:

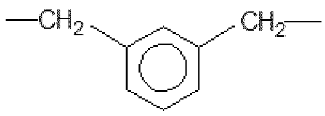

- f) dem Rest, der sich von Hexamethylendiisocyanat (HDI) ableitet:

$$-(CH_2)_6-$$

wobei der Rest $R^1$ vorzugsweise der zweiwertigen Rest ist, der sich von Isophorondiisocyanat oder von Xylylendiisocyanat ableitet.

**10.** Zusammensetzung nach einem der Ansprüche 1 bis 9, **dadurch gekennzeichnet, dass**:

- $R^3$ der zweiwertige Methylen- oder n-Propylenrest ist;
- $R^4$ und $R^5$ jeweils für den Methyl- oder Ethylrest stehen; und/oder
- p gleich 0 oder 1 ist.

**11.** Zusammensetzung nach einem der Ansprüche 1 bis 10, **dadurch gekennzeichnet, dass** die Zusammensetzung (A-1) zusätzlich mindestens ein amorphes Polyestermonol der folgenden Formel (IV) umfasst:

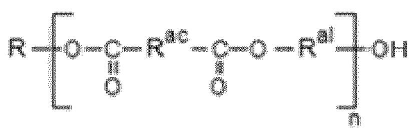

(IV).

**12.** Zusammensetzung nach einem der Ansprüche 1 bis 11, **dadurch gekennzeichnet, dass** sie Folgendes umfasst:

- (a) 20 bis 75 Gew.-%, vorzugsweise 30 bis 64 Gew.-%, bevorzugt 45 bis 55 Gew.-%, Zusammensetzung (A), wobei die Zusammensetzung (A) Folgendes umfasst:

• 75 bis 100 Gew.-%, vorzugsweise 85 bis 100 Gew.-%, bevorzugt 90 bis 100 Gew.-%, Polyurethan mit zwei hydrolysierbaren Endgruppen vom Alkoxysilan-Typ der Formel (I); und
• 0 bis 25 Gew.-%, vorzugsweise 0 bis 15 Gew.-%, mindestens eines Polyurethans mit einer hydrolysierbaren Endgruppe vom Alkoxysilan-Typ und mit der Formel (II); und

- (b) 15 bis 79 Gew.-%, vorzugsweise 35 bis 69 Gew.-%, bevorzugt 40 bis 60 Gew.-%, Klebrigmacherharz (B),
- (c) 0,01 bis 5 Gew.-%, vorzugsweise 0,1 bis 3 Gew.-%, bevorzugt 1 bis 3 Gew.-%, Vernetzungskatalysator (C);
- (d) 0 bis 20 Gew.-%, vorzugsweise 0 bis 15 Gew.-%, bevorzugt 0 bis 10 Gew.-%, mindestens eines Additivs, das aus der Gruppe bestehend aus Lösungsmitteln, Pigmenten, Farbstoffen, Haftvermittlern, Weichmachern, UV-Stabilisatoren, Antioxidantien, Flitter, fluoreszierenden Materialien, Rheologieadditiven, Antiaustrocknungsmitteln, anorganischen oder organischen Füllstoffen und Mischungen davon ausgewählt ist.

**13.** Zusammensetzung nach einem der Ansprüche 1 bis 12, **dadurch gekennzeichnet, dass** sie eine gemäß der in der Beschreibung angegebenen Methode bei 100 °C gemessene Viskosität kleiner oder gleich 1000 Pa.s, vorzugsweise weniger als 500 Pa.s, bevorzugt kleiner oder gleich 100 Pa.s, weiter bevorzugt kleiner oder gleich 50 Pa.s, beispielsweise kleiner oder gleich 20 Pa.s, aufweist.

**14.** Verwendung der Klebstoffzusammensetzung nach einem der Ansprüche 1 bis 13 bei der Herstellung eines Selbstklebeartikels, wie beispielsweise eines einseitigen oder doppelseitigen Selbstklebeetiketts und/oder -bands.

**15.** Selbstklebeartikel, umfassend eine Trägerschicht, die mit einer selbstklebenden Schicht beschichtet ist, wobei die selbstklebende Schicht aus einer Klebstoffzusammensetzung gemäß einem der Ansprüche 1 bis 13 im vernetzten Zustand besteht.

**Claims**

**1.** Heat-crosslinkable adhesive composition, comprising:

- from 20% to 84% by weight of a composition (A) comprising:

• from 75% to 100% by weight of at least one polyurethane comprising two end groups of alkoxysilane type which are hydrolysable and having the following formula (I):

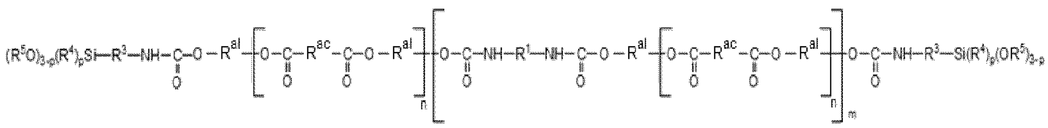

(I)

in which:

- $R^1$ represents a divalent hydrocarbon radical comprising from 5 to 15 carbon atoms which can be aromatic or aliphatic and linear, branched or cyclic;
- $R^{al}$ represents a divalent hydrocarbon radical resulting from a saturated diol, by replacement of each of the two hydroxyl groups by a free valency, said diol having a hydroxyl number $I_{on}$ of greater than 220 mg KOH/g;
- $R^{ac}$ represents a divalent hydrocarbon radical resulting from a saturated dicarboxylic acid, by replacement of each of the two carboxyl -COOH groups by a free valency, said acid having an acid number $I_A$ of greater than 200 mg KOH/g;
- n is a number such that the polyester diol of formula (III) :

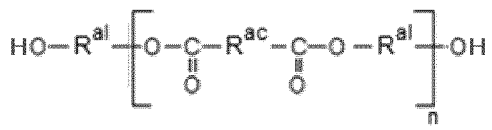

(III)

has a hydroxyl number $I_{OH}$ of between 4 and 24 mg KOH/g, preferably between 9 and 24 mg KOH/g;
- $R^3$ represents a linear divalent alkylene radical comprising from 1 to 3 carbon atoms;
- $R^4$ and $R^5$, which are identical or different, each represent a linear or branched alkyl radical of 1 to 4 carbon atoms, with the possibility, when there are several $R^4$ (or $R^5$) radicals, that the latter are identical or different;
- m is an integer such that the number-average molar mass of the polymer of formula (I) is between 400 g/mol and 50 000 g/mol;
- p is an integer equal to 0, 1 or 2;

• from 0% to 25% by weight of at least one polyurethane comprising one end group of alkoxysilane type which is hydrolysable and having the following formula (II):

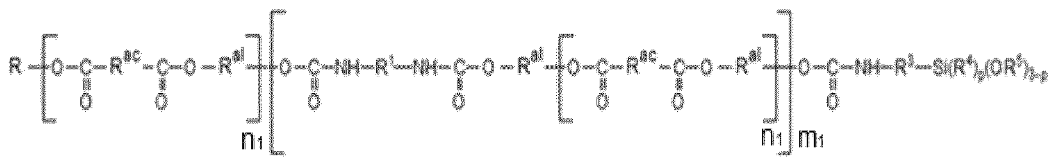

(II)

in which:

- $n_1$ and $m_1$ are each integers such that the number-average molar mass of the polyurethane of formula (II) is between 400 g/mol and 50 000 g/mol;
- $R^{ac}$ and $R^{al}$ are as defined above; and
- R represents a monovalent hydrocarbon radical resulting from a monol, by replacement of the hydroxyl group by a free valency;

said composition (A) being obtained by a process which comprises a stage of preparation of a composition (A-1) comprising an amorphous polyester diol of abovementioned formula (III) or a mixture of amorphous polyester diols of abovementioned formula (III), by reacting, by a polycondensation reaction:

- (i) a composition (A-1-1) comprising at least one saturated dicarboxylic acid, said composition (A-1-1) having an acid number $I_A$ of greater than 200 mg KOH/g, preferably of greater than or equal to 300 mg KOH/g, preferentially of greater than or equal to 500 mg KOH/g, in particular of greater than or equal to 700 mg KOH/g and advantageously of greater than or equal to 800 mg KOH/g;
and
- (ii) a composition (A-1-2) comprising at least one saturated diol, said composition (A-1-2) having a hydroxyl number $I_{OH}$ of greater than 220 mg KOH/g, preferably of greater than or equal to 500 mg KOH/g, preferentially of greater than or equal to 700 mg KOH/g, more preferentially still of greater than or equal to 900 mg KOH/g;
and
- (iii) optionally a composition (A-1-3) comprising at least one monol;

provided that at least one saturated dicarboxylic acid of the composition (A-1-1) or at least one saturated diol of the composition (A-1-2) is branched;
the composition (A-1) having a hydroxyl number $I_{on}$ of between 4 and 24 mg KOH/g, preferably between 7 and 24 mg KOH/g, preferentially between 9 and 24 mg KOH/g;

- from 15% to 79% by weight of a compatible tackifying resin (B), preferably with a number-average molar mass of between 200 g/mol and 50 000 g/mol, and preferentially chosen from the following resins:

- (i) capable of being obtained by polymerization of terpene hydrocarbons and phenols, in the presence of Friedel-Crafts catalyst(s);
- (ii) capable of being obtained by polymerization of α-methylstyrene, and optionally by reaction with phenols;
- (iii) rosins of natural origin or modified rosins (such as, for example, the rosin extracted from pine gum, wood rosin extracted from tree roots) and their derivatives which are hydrogenated, dimerized, polymerized or esterified by monoalcohols or polyols (such as, for example, glycerol or pentaerythritol);
- (iv) acrylic resins having in particular a viscosity at 100°C of less than 100 Pa.s, measured according to the method described in the description; and
- (v) their mixtures;
- from 0.01% to 5%, preferably from 0.01% to 3%, by weight, of a crosslinking catalyst (C).

2. Composition according to Claim 1, **characterized in that** the saturated dicarboxylic acid of the composition (A-1-1) has an acid number $I_A$ of greater than or equal to 300 mg KOH/g, preferably of greater than or equal to 400 mg KOH/g, preferentially of greater than or equal to 500 mg KOH/g, in particular of greater than or equal to 700 mg KOH/g and advantageously of greater than or equal to 800 mg KOH/g.

3. Composition according to either one of Claims 1 and 2, **characterized in that** the saturated diol of the composition (A-1-2) has a hydroxyl number $I_{on}$ of greater than or equal to 500 mg KOH/g, preferably of greater than or equal to 700 mg KOH/g, more preferentially still of greater than or equal to 900 mg KOH/g.

4. Composition according to any one of Claims 1 to 3, **characterized in that** the number-average molar mass of the polyurethane comprising two hydrolysable end groups of alkoxysilane type of formula (I) is between 500 g/mol and 50 000 g/mol, preferably between 600 g/mol and 30 000 g/mol, preferentially between 4000 g/mol and 25 000 g/mol, for example between 8000 g/mol and 25 000 g/mol.

5. Composition according to any one of Claims 1 to 4, **characterized in that** the amorphous polyester diol of formula (III) has a hydroxyl number $I_{on}$ of between 7 and 24 mg KOH/g, preferably between 7 and 20 mg KOH/g and in particular between 9 and 19 mg KOH/g.

6. Composition according to any one of Claims 1 to 5, **characterized in that** the amorphous polyester diol of formula (III) has a viscosity, measured at 23°C, of less than 10 000 Pa.s, measured according to the method described in the description, preferably of less than 1000 Pa.s, preferentially of less than or equal to 700 Pa.s, more preferentially of less than or equal to 690 Pa.s, more preferentially still of less than or equal to 500 Pa.s, in particular of less than or equal to 250 Pa.s, for example of less than or equal to 190 Pa.s, in particular of less than or equal to 100 Pa.s.

7. Composition according to any one of Claims 1 to 6, **characterized in that** the amorphous polyester diol of formula (III) has a glass transition temperature $T_g$ of less than 0°C, measured according to the method described in the description, preferably of less than or equal to -20°C, preferably of less than or equal to -40°C, preferentially of less than or equal to -50°C, in particular of less than or equal to -60°C, for example of less than or equal to -64°C.

8. Composition according to any one of Claims 1 to 7, **characterized in that** at least one saturated diol of the composition (A-1-2) is branched; preferably, all the saturated diols as a mixture in the composition (A-1-2) are branched.

9. Composition according to any one of Claims 1 to 8, **characterized in that** the $R^1$ radical is chosen from one of the following divalent radicals, the formulae of which below show the two free valencies:

- a) the divalent radical derived from isophorone diisocyanate (IPDI):

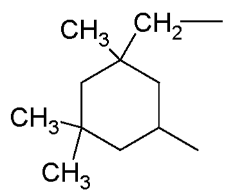

- b)

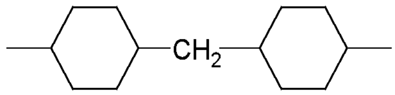

- c) the radical derived from toluene-2,4- and -2,6-diisocyanate (TDI):

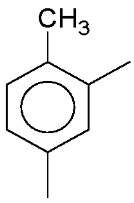

or

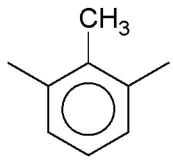

- d) the radical derived from diphenylmethane-4,4'- and -2,4'-diisocyanate (MDI):

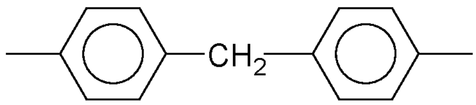

or

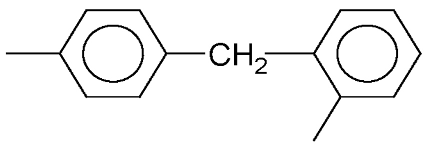

- e) the radical derived from m-xylylene diisocyanate (m-XDI):

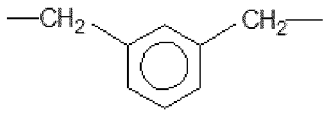

- f) the radical derived from hexamethylene diisocyanate (HDI):

$$-(CH_2)_6-$$

said $R^1$ radical preferably being the divalent radical derived from isophorone diisocyanate or from xylylene diisocyanate.

**10.** Composition according to any one of Claims 1 to 9, **characterized in that**:

- $R^3$ is the divalent methylene or n-propylene radical;
- $R^4$ and $R^5$ each represent the methyl or ethyl radical; and/or
- p is equal to 0 or 1.

**11.** Composition according to any one of Claims 1 to 10, **characterized in that** the composition (A-1) additionally comprises at least one amorphous polyester monol of following formula (IV):

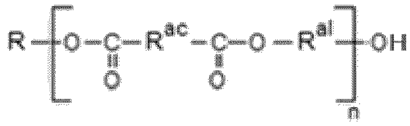

(IV)

**12.** Composition according to any one of Claims 1 to 11, **characterized in that** it comprises:

- (a) from 20% to 75%, preferably from 30% to 64%, preferentially from 45% to 55%, by weight, of composition (A), said composition (A) comprising:

  • from 75% to 100%, preferably from 85% to 100%, preferentially from 90% to 100%, by weight, of polyurethane comprising two hydrolysable end groups of alkoxysilane type of formula (I); and
  • from 0% to 25%, preferably from 0% to 15%, by weight, of at least one polyurethane comprising one hydrolysable end group of alkoxysilane type of formula (II); and

- (b) from 15% to 79%, preferably from 35% to 69%, preferentially from 40% to 60%, by weight, of tackifying resin (B),
- (c) from 0.01% to 5%, preferably from 0.1% to 3%, preferentially from 1% to 3%, by weight, of crosslinking catalyst (C);
- (d) from 0% to 20%, preferably from 0% to 15%, preferentially from 0% to 10%, by weight, of at least one additive chosen from the group consisting of solvents, pigments, dyes, adhesion promoters, plasticizers, UV stabilizers, antioxidants, glitter, fluorescent materials, rheological additives, dehydration inhibitors, inorganic or organic fillers, and their mixtures.

**13.** Composition according to any one of Claims 1 to 12, **characterized in that** it has a viscosity, measured at 100°C, of less than or equal to 1000 Pa.s, measured according to the method described in the description, preferably of less than 500 Pa.s, preferentially of less than or equal to 100 Pa.s, more preferentially of less than or equal to 50 Pa.s, for example of less than or equal to 20 Pa.s.

**14.** Use of the adhesive composition according to any one of Claims 1 to 13, in the manufacture of a self-adhesive article, such as, for example, a single-sided or double-sided self-adhesive label and/or tape.

**15.** Self-adhesive article comprising a support layer coated with a self-adhesive layer, said self-adhesive layer consisting of an adhesive composition as defined according to any one of Claims 1 to 13 in the crosslinked state.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 2865694 A1


### Littérature non-brevet citée dans la description


- *CHEMICAL ABSTRACTS,* 107-21-1
- *CHEMICAL ABSTRACTS,* 42856-62-2
- *CHEMICAL ABSTRACTS,* 4457-71-0
- *CHEMICAL ABSTRACTS,* 2157-31-5
- *CHEMICAL ABSTRACTS,* 3121-82-2
- *CHEMICAL ABSTRACTS,* 53120-74-4
- *CHEMICAL ABSTRACTS,* 81554-20-3
- *CHEMICAL ABSTRACTS,* 126-30-7
- *CHEMICAL ABSTRACTS,* 115-76-4
- *CHEMICAL ABSTRACTS,* 78-26-2
- *CHEMICAL ABSTRACTS,* 115-84-4
- *CHEMICAL ABSTRACTS,* 2163-42-0
- *CHEMICAL ABSTRACTS,* 14690-00-7
- *CHEMICAL ABSTRACTS,* 31952-16-6
- *CHEMICAL ABSTRACTS,* 24765-57-9
- *CHEMICAL ABSTRACTS,* 15208-19-2
- *CHEMICAL ABSTRACTS,* 49623-11-2
- *CHEMICAL ABSTRACTS,* 80220-07-1
- *CHEMICAL ABSTRACTS,* 928-40-5
- *CHEMICAL ABSTRACTS,* 4089-71-8
- *CHEMICAL ABSTRACTS,* 82111-97-5
- *CHEMICAL ABSTRACTS,* 23433-04-7
- *CHEMICAL ABSTRACTS,* 1117-86-8
- *CHEMICAL ABSTRACTS,* 23433-05-8
- *CHEMICAL ABSTRACTS,* 27143-31-3
- *CHEMICAL ABSTRACTS,* 109359-36-6
- *CHEMICAL ABSTRACTS,* 75656-41-6
- *CHEMICAL ABSTRACTS,* 3207-95-2
- *CHEMICAL ABSTRACTS,* 76779-60-7
- *CHEMICAL ABSTRACTS,* 85018-58-2
- *CHEMICAL ABSTRACTS,* 42789-13-9
- *CHEMICAL ABSTRACTS,* 40326-00-9
- *CHEMICAL ABSTRACTS,* 13686-96-9
- *CHEMICAL ABSTRACTS,* 85018-64-0
- *CHEMICAL ABSTRACTS,* 85018-65-1
- *CHEMICAL ABSTRACTS,* 85018-63-9
- *CHEMICAL ABSTRACTS,* 35449-36-6
- *CHEMICAL ABSTRACTS,* 48074-20-0
- *CHEMICAL ABSTRACTS,* 128705-94-2
- *CHEMICAL ABSTRACTS,* 112548-49-9
- *CHEMICAL ABSTRACTS,* 109217-58-5
- *CHEMICAL ABSTRACTS,* 48074-21-1
- *CHEMICAL ABSTRACTS,* 35449-37-7
- *CHEMICAL ABSTRACTS,* 13006-29-6
- *CHEMICAL ABSTRACTS,* 1119-87-5
- *CHEMICAL ABSTRACTS,* 33666-71-6
- *CHEMICAL ABSTRACTS,* 85018-68-4
- *CHEMICAL ABSTRACTS,* 85018-69-5
- *CHEMICAL ABSTRACTS,* 85018-70-8
- *CHEMICAL ABSTRACTS,* 5658-47-9
- *CHEMICAL ABSTRACTS,* 80158-99-2
- *CHEMICAL ABSTRACTS,* 62870-49-9
- *CHEMICAL ABSTRACTS,* 38146-95-1
- *CHEMICAL ABSTRACTS,* 39516-24-0
- *CHEMICAL ABSTRACTS,* 39516-27-3
- *CHEMICAL ABSTRACTS,* 22092-59-7
- *CHEMICAL ABSTRACTS,* 20999-41-1
- *CHEMICAL ABSTRACTS,* 91635-53-9
- **W. WAGNER et al.** *International Steam Tables - Properties of Water and Steam based on the Industrial Formulation IAPWS-IF97*
- Manuel Technique FINAT. 2001
- Manuel Technique PSTC. la fédération internationale des fabricants de rubans adhésifs